# EUROPEAN PATENT APPLICATION

(11) **EP 4 568 203 A1**
(43) Date of publication of application: **11.06.2025**
(21) Application number: 22963205.4
(22) Date of filing: 28.10.2022
(51) Int. Cl.: H04L 27/00

(54) **SENSING MEASUREMENT METHOD, AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: GAO, Ning, Dongguan, Guangdong 523860 (CN); LUO, Chaoming, Dongguan, Guangdong 523860 (CN)
(74) Representative: Novagraaf Technologies
(86) International application number: PCT/CN2022/128424
(87) International publication number: WO 2024/087224

(57) **Abstract**

areThe present application belongs to the field of sensing measurement. Disclosed are a sensing measurement method, and an apparatus, a device, a medium and a program product. The method is executed by means of a sensing participation device, and comprises: during a sensing measurement process, sending or receiving a frame carrying a First field, wherein the First field is used for indicating information related to the setting of a coordinate system; and during a cooperative single-base sensing process in a parallel mode, sending or receiving a frame carrying a Second field, wherein the Second field is used for indicating information related to the duration of a single-base PPDU. In the method, the frame carrying the First field is sent or received during the sensing measurement process, such that information related to the coordinate system is set or negotiated between sensing participation devices, and thus a coordinate system for an azimuth angle/elevation angle is explicitly indicated; and the frame carrying the Second field is sent or received during the cooperative single-base sensing process in the parallel mode, such that the information related to the duration of the single-base PPDU is set or negotiated between the sensing participation devices, thereby ensuring the accuracy of a sensing measurement result.

## Description

### TECHNICAL FIELD

Embodiments of the present disclosure relates to the technical field of sensing measurement, and in particular, relate to a method and apparatus for sensing measurement, and a device, a medium, and a program product thereof.

### BACKGROUND

Wireless local area network (WLAN) sensing refers to a technology for sensing a person or an object in an environment by measuring changes of WLAN signals during scattering and/or reflection by the person or the object.

### SUMMARY

Embodiments of the present disclosure provide a method and apparatus for sensing measurement, and a device, a medium, and a program product thereof. The technical solutions are as follows.

According to an aspect of the embodiments of the present disclosure, a method for sensing measurement is provided. The method is applicable to a sensing participant, and includes:
transmitting or receiving a frame carrying a first field in a sensing measurement process, wherein the first field indicates information related to coordinate system setting.

According to an aspect of the embodiments of the present disclosure, a method for sensing measurement is provided. The method is applicable to a sensing participant, and includes:
transmitting or receiving a frame carrying a second field in a parallel coordinated monostatic sensing process, wherein the second field indicates duration information of a monostatic physical layer protocol data unit (PPDU).

According to an aspect of the embodiments of the present disclosure, an apparatus for sensing measurement. The apparatus includes:
a transceiver module, configured to transmit or receive a frame carrying a first field in a sensing measurement process, wherein the first field indicates information related to coordinate system setting.

According to an aspect of the embodiments of the present disclosure, an apparatus for sensing measurement. The apparatus includes:
a transceiver module, configured to transmit or receive a frame carrying a second field in a parallel coordinated monostatic sensing process, wherein the second field indicates duration information of a monostatic PPDU.

According to an aspect of the embodiments of the present disclosure, a sensing participant is provided. The sensing participant includes: a processor, a transceiver connected to the processor, and a memory storing one or more runnable programs of the processor. The processor, when loading and running the one or more runnable programs, causes the sensing participant to perform the method for sensing measurement in the above aspect.

According to some embodiments of the present disclosure, a computer-readable storage medium is provided, wherein at least one instruction, at least one program, a code set, or an instruction set is stored in the computer-readable storage medium. The at least one instruction, the at least one program, the code set, or the instruction set, when loaded and executed by a processor, causes the processor to perform the method for sensing measurement in the above embodiments.

According to some embodiments of the present disclosure, a computer program product (or a computer program) is provided. The computer program product (or the computer program) includes one or more computer instructions stored in a computer-readable storage medium. The one or more computer instructions, when read and executed by a processor of a computer device, cause the computer device to perform the method for sensing measurement in the above embodiments.

According to some embodiments of the present disclosure, a chip is provided. The chip includes programmable logical circuity and/or one or more program instructions, wherein the chip, when running, is caused to perform the method for sensing measurement in the above embodiments.

The technical solutions according to the embodiments of the present disclosure achieve the following technical effects.

Information related to the coordinate system is set or negotiated between sensing participants by transmitting or receiving the frame carrying the first field in the sensing measurement process, such that a coordinate system of azimuth/elevation is clearly indicated. Duration information of the monostatic PPDU is set or negotiated between sensing participants by transmitting or receiving the frame carrying the second field in the parallel coordinated monostatic sensing process, such that a response sensing procedure operates normally, and an accuracy of a sensing measurement result is ensured.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a sensing measurement system according to some embodiments of the present disclosure;
FIG. 2 is a schematic diagram of millimeter wave sensing types according to some embodiments of the present disclosure;
FIG. 3 is a schematic diagram of a procedure of millimeter wave sensing according to some embodiments of the present disclosure;
FIG. 4 is a flowchart of a method for sensing measurement according to some embodiments of the present disclosure;
FIG. 5 is a schematic diagram of establishment of a sensing measurement procedure between a sensing initiator and a sensing responder according to some embodiments of the present disclosure;
FIG. 6 is a schematic diagram of establishment of a sensing measurement procedure between a sensing initiator and a sensing responder according to some embodiments of the present disclosure;
FIG. 7 is a schematic diagram of establishment of a sensing measurement procedure between a sensing initiator and a sensing responder according to some embodiments of the present disclosure;
FIG. 8 is a schematic diagram of a structure of a beacon frame in some practices;
FIG. 9 is a schematic diagram of a structure of a management frame in some practices;
FIG. 10 is a schematic diagram of a structure of an announce frame, an information request frame, and an information response frame in some practices;
FIG. 11 is a schematic diagram of a structure of a sensing measurement setup request frame in some practices;
FIG. 12 is a schematic diagram of a structure of a sensing measurement setup response frame in some practices;
FIG. 13 is a schematic diagram of a structure of a Directional Multi-Gigabit (DMG) Sensing Beam Descriptor element in some practices;
FIG. 14 is a schematic diagram of a structure of a DMG Sensing Beam Descriptor element according to some embodiments of the present disclosure;
FIG. 15 is a schematic diagram of a structure of a DMG Sensing Beam Descriptor element according to some embodiments of the present disclosure;
FIG. 16 is a schematic diagram of a structure of a DMG Beacon Sector Descriptor element in some practices;
FIG. 17 is a schematic diagram of a structure of a DMG Beacon Sector Descriptor element according to some embodiments of the present disclosure;
FIG. 18 is a schematic diagram of a structure of a DMG Beacon Sector Descriptor element according to some embodiments of the present disclosure;
FIG. 19 is a schematic diagram of a structure of a DMG Passive Sensing Beacon Information element in some practices;
FIG. 20 is a schematic diagram of a structure of a DMG Passive Sensing Beacon Information element according to some embodiments of the present disclosure;
FIG. 21 is a schematic diagram of a structure of a DMG Passive Sensing Beacon Information element according to some embodiments of the present disclosure;
FIG. 22 is a schematic diagram of a structure of a DMG Sensing Short Capability element in some practices;
FIG. 23 is a schematic diagram of a DMG Sensing Measurement Setup element in some practices;
FIG. 24 is a schematic diagram of a structure of a DMG Sensing Measurement Setup element according to some embodiments of the present disclosure;
FIG. 25 is a schematic diagram of a structure of a DMG Sensing Measurement Setup element according to some embodiments of the present disclosure;
FIG. 26 is a schematic diagram of a sequential mode instance of millimeter wave coordinated monostatic sensing measurement according to some embodiments of the present disclosure;
FIG. 27 is a schematic diagram of a parallel mode instance of millimeter wave coordinated monostatic sensing measurement according to some embodiments of the present disclosure;
FIG. 28 is a schematic diagram of a format of a sensing request frame in some practices;
FIG. 29 is a schematic flowchart of parallel coordinated monostatic sensing measurement according to some embodiments of the present disclosure;
FIG. 30 is a flowchart of a method for sensing measurement according to some embodiments of the present disclosure;
FIG. 31 is a schematic diagram of a structure of a DMG Sensing Measurement Setup element in some practices;
FIG. 32 is a schematic diagram of a structure of a Coordinated Monostatic Specific Configuration Optional sub-element according to some embodiments of the present disclosure;
FIG. 33 is a schematic diagram of a structure of a Coordinated Monostatic Specific Configuration Optional sub-element according to some embodiments of the present disclosure;
FIG. 34 is a schematic diagram of a format of a Time-Division Duplexing (TDD) beamforming frame in some practices;
FIG. 35 is a schematic diagram of a structure of a DMG sensing response frame according to some embodiments of the present disclosure;
FIG. 36 is a schematic diagram of a structure of a DMG sensing response frame according to some embodiments of the present disclosure;
FIG. 37 is a schematic diagram of a structure of a DMG sensing response frame according to some embodiments of the present disclosure;
FIG. 38 is a schematic diagram of a structure of a DMG sensing request frame according to some embodiments of the present disclosure;
FIG. 39 is a schematic diagram of a structure of a DMG sensing request frame according to some embodiments of the present disclosure;
FIG. 40 is a schematic diagram of a structure of a DMG sensing request frame according to some embodiments of the present disclosure;
FIG. 41 is a block diagram of a sensing participant apparatus according to some embodiments of the present disclosure;
FIG. 42 is a block diagram of a sensing participant apparatus according to some embodiments of the present disclosure; and
FIG. 43 is a schematic structural diagram of a sensing participant according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings.

Some key terms in the present disclosure are described as follows.

**WLAN sensing** is a technology for sensing a person or an object in an environment by measuring changes in WLAN signals scattered and/or reflected by the person or the object. That is, the WLAN sensing measures and senses the surrounding environment by wireless signals, such that various functions can be achieved, such as detection of whether someone intrudes/moves/falls indoors, gesture recognition, and establishment of three-dimensional spatial images.

**An association identifier (AID)** is configured to identify a terminal that has established an association with an access point.

WLAN devices that participate in the WLAN sensing may include a sensing initiator, a sensing responder, a sensing transmitter, and a sensing receiver.

**The sensing initiator** is also referred to as a sensing session initiator, a sensing initiating device, a sensing initiating apparatus, and an initiator, and the sensing initiator is a device that initiates sensing measurement and desires to learn a sensing result.

**The sensing responder** is also referred to as a sensing session responder, a sensing responding device, a sensing responding apparatus, and a responder, and the sensing responder is a device that participates in the sensing measurement and is not a sensing initiating device.

**The sensing transmitter** is also referred to as a sensing signal transmitting device, a sensing signal transmitter, a sensing transmitting device, and a sensing transmitting apparatus, and the sensing transmitter is a device that transmits a PPDU.

**The sensing receiver** is also referred to as a sensing signal receiving device, a sensing signal receiver, a sensing receiving device, and a sensing receiving apparatus. The sensing receiver is a device that receives an echo signal. The echo signal is acquired by scattering and/or reflecting for the sensing physical layer protocol data unit transmitted by the sensing transmitter by people or objects.

A WLAN terminal plays one or more roles in the sensing measurement. For example, the sensing initiator is only a sensing initiator, a sensing transmitter, a sensing receiver, or both a sensing transmitter and a sensing receiver. The devices described above are collectively referred to as sensing measurement devices.

Next, the technical background related to the embodiments of the present disclosure is described as follows.

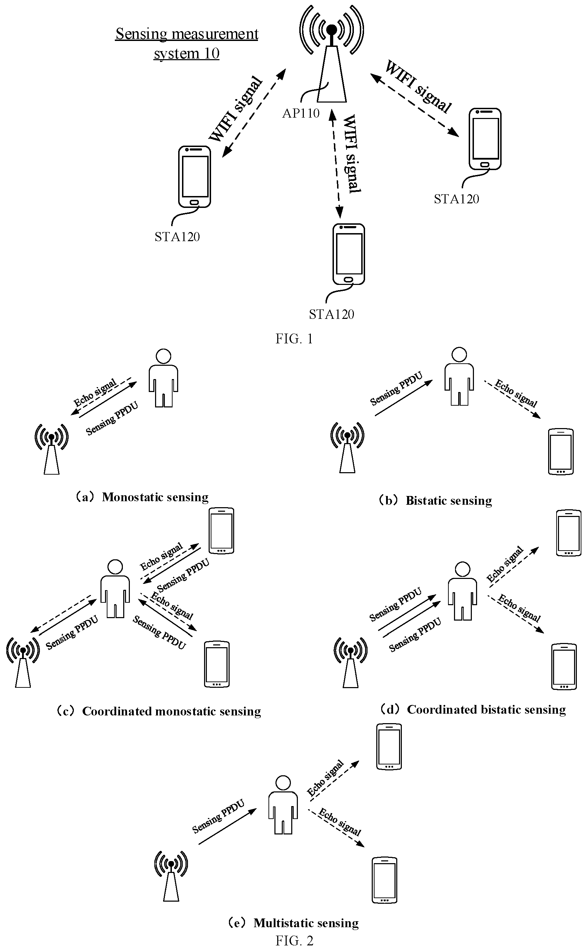

FIG. 1 is a schematic diagram of a sensing measurement system according to some embodiments of the present disclosure. The sensing measurement system includes a terminal and a terminal, or a terminal and a network device, or an access point (AP) and a station (STA), which is not limited in the present disclosure. In the present disclosure, the sensing measurement system is illustrated as including the AP and the STA.

In some scenarios, the AP is also referred to as an AP STA, which means that, in a certain sense, the AP is also a type of STA. In some scenarios, the STA is also referred to as a non-AP STA.

In some embodiments, STAs include an AP STA and a non-AP STA.

The communications within the communication system involve communications between an AP and a non-AP STA, communications between non-AP STAs, or communications between an STA and a peer STA. The peer STA refers to a device communicating with an STA at an opposite terminal. For example, the peer STA may be an AP or a non-AP STA.

The AP functions as a bridge connecting the wired network and the wireless network, primarily serving to connect various wireless network clients together and then accessing the wireless network to the Ethernet. AP devices may be terminal devices (such as mobile phones) or network devices (such as routers) equipped with wireless-fidelity (Wi-Fi) chips.

It should be understood that the role of the STA in the communication system is not absolute. For example, in some scenarios, in the case that a mobile phone is connected to a router, the mobile phone acts as a non-AP STA. However, in the case that the mobile phone serves as a hotspot for other mobile phones, the mobile phone is an AP.

Both the AP and the non-AP STA may be devices applied in the Internet of Vehicles, Internet of Things (IoT) nodes and sensors in the IoT, smart cameras, smart remotes, smart water meters, and electricity meters in smart homes, and sensors in smart cities.

In some embodiments, the non-AP STA supports, but is not limited to, the 802.11bf standard. The non-AP STA may also support various current and future WLAN standards of the 802.11 family, such as 802.11ax, 802.11ac, 802.11n, 802.11g, 802.11b, and 802.11a.

In some embodiments, the AP is a device that supports the 802.11bf standard. The AP may also be a device that supports various current and future WLAN standards of the 802.11 family, such as 802.11ax, 802.11ac, 802.11n, 802.11g, 802.11b, and 802.11a.

In the embodiments of the present disclosure, the STA may be devices that support the WLAN/Wi-Fi technology, such as mobile phones, tablets, computers, virtual reality (VR) devices, augmented reality (AR) devices, industrial control wireless devices, set-top boxes, self-driving wireless devices, in-vehicle communication devices, wireless devices in remote medical applications, wireless devices in smart grids, wireless devices in transportation safety, wireless devices in smart cities, wireless devices in smart homes, and wireless communication chips/application specific integrated circuit (ASIC)/system-on-chip (SoC).

Frequency bands supported by the WLAN technology include but are not limited to low-frequency bands (2.4 GHz, 5 GHz, and 6 GHz) and a high-frequency band (60 GHz).

One or more links are present between the STA and the AP.

In some embodiments, the STA and the AP support multi-band communications, such as simultaneous communications at 2.4 GHz, 5 GHz, 6 GHz, and 60 GHz bands, or simultaneous communications in different channels of the same frequency band (or different frequency bands), such that the communication throughput and/or reliability between devices is improved. Such devices are often referred to as multi-band devices, or multi-link devices (MLDs), and are also referred to as multi-link entities or multi-band entities. The multi-link device may be an AP device or an STA device. In the case that the multi-link device is an AP device, one or more APs are included in the multi-link device; and in the case that the multi-link device is an STA, one or more non-AP STAs are included in the multi-link device.

The multi-link device including one or more APs is also referred to as an AP, and the multi-link device including one or more non-AP STAs is also referred to as a non-AP. In the embodiments of the present disclosure, the non-AP is also referred to as an STA.

In the embodiments of the present disclosure, the AP may include a plurality of APs, the non-AP may include a plurality of STAs, a plurality of links may be formed between the APs in the AP and the STAs in the non-AP, and data communication may be performed between the APs in the AP and the corresponding STAs in the non-AP over the corresponding links.

The AP is a device deployed in a wireless local area network to provide a wireless communication function for the STA. The station may include a user equipment (UE), an access terminal, a subscriber unit, a subscriber station, a rover station, a mobile station, a remote station, a remote terminal, a mobile device, a wireless communication device, a user agent, or a user apparatus. In some embodiments, the station is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In the embodiments of the present disclosure, both the station and the access point support the IEEE 802.11 standard, but not limited to the IEEE 802.11 standard. The station and the access point may support other standards related to sensing measurement, such as the IEEE 802.11 bf D0.1 standard.

In the WLAN sensing scenario, WLAN terminals involved in sensing include a sensing initiator and a sensing responder. Further, the sensing responder may be classified into a sensing transmitter and a sensing receiver.

The sensing measurement is applicable to a cellular network communication system, a WLAN system, or a Wi-Fi system, which is not limited in the present disclosure. In the present disclosure, the sensing measurement is illustrated as being applied to the WLAN or Wi-Fi system.

In some embodiments, the sensing measurement in the embodiments of the present disclosure is implemented based on millimeter waves. The millimeter wave sensing types are described hereinafter.

FIG. 2 is a schematic diagram of millimeter wave sensing types according to some embodiments of the present disclosure. FIG. 2(a) shows monostatic sensing, where only one device participates in the sensing. The device senses the environment by self-transmitting a sensing PPDU and self-receiving an echo signal, similarly to the operation of a conventional radar. In transmitting the sensing PPDU, the self-transmitting and self-receiving device sets an address of the transmitter and an address of the receiver of the sensing PPDU as an address of the device itself. The sensing PPDU transmitted by the device forms an echo signal upon scattering and/or reflecting by the environment, and then the device receives the echo signal based on the address of the device, and the device senses the environment by analyzing the echo signal. In addition, FIG. 2(b) shows bistatic sensing, where two devices participate in sensing, one of which transmits a sensing PPDU and the other one receives an echo signal to sense the environment. In addition, FIG. 2(c) shows coordinated monostatic sensing, where more than one device participates in sensing, each device senses the environment by self-transmitting a sensing PPDU and self-receiving an echo signal, and a sensing initiator controls all other devices to achieve coordination. In addition, FIG. 2(d) shows coordinated bistatic sensing, where more than two devices participate in sensing, that is, at least two pairs of bistatic sensing devices are present, and each transmitting device (sensing transmitter) transmits a sensing PPDU and a receiving device (sensing receiver) in the same group receives a corresponding echo signal, such that the coordinated sensing is achieved. In addition, FIG. 2(e) shows multistatic sensing, where more than two devices participate in the sensing, one transmitting device transmits a sensing PPDU, and a plurality of receiving devices simultaneously receive echo signals and complete environment sensing.

The millimeter wave sensing procedure is described hereinafter.

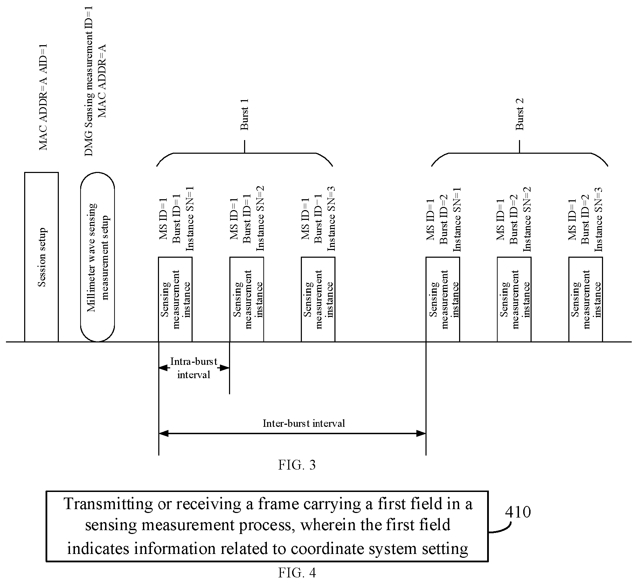

FIG. 3 is a schematic diagram of a procedure of millimeter wave sensing according to some embodiments of the present disclosure. As shown in FIG. 3, the procedure is a general procedure of millimeter wave sensing, where a session setup phase, a millimeter wave sensing measurement setup (DMG measurement setup) phase, and a sensing measurement phase are sequentially provided from left to right. The sensing measurement phase consists of a plurality of sensing measurement bursts, and each burst consists of a plurality of sensing measurement instances. A time interval between bursts is an inter-burst interval, and a time interval between adjacent sensing measurement instances in one burst is an intra-burst interval. In FIG. 3, the MAC ADDR refers to a medium access control (MAC) address, the AID refers to an association identifier, the DMG measurement setup identity document refers to a millimeter wave sensing measurement setup identifier, the MS ID refers to a measurement setup (MS) identifier, the burst ID refers to a burst identifier, and the instance sequential number (SN) refers to a sensing measurement instance identifier, which may also be referred to as a sensing instance SN or a sensing instance ID.

In a millimeter wave sensing measurement process in some practices, the sensing participate needs to acquire angle information of a sensing beam, and thus information of beam azimuth and/or beam elevation are required. However, the beam azimuth/beam elevation is inaccurately indicated due to design of a frame format in some practices, such that a coordinate system of the sensing beam angle is inaccurately indicated, normal execution of the sensing procedure is affected. The method for sensing measurement according to the present disclosure can efficiently solve the problem.

FIG. 4 is a flowchart of a method for sensing measurement according to some embodiments of the present disclosure. The embodiments are illustrated using an example where the method is applicable to a sensing participant. The sensing participant includes at least one of a sensing initiator or a sensing responder. The method includes the following processes.

**In S410,** a frame carrying a first field is transmitted or received in a sensing measurement process, wherein the first field indicates information related to coordinate system setting.

The information related to coordinate system setting is setting information or configuration information related to a coordinate system used in the sensing measurement process. In some embodiments, the information related to coordinate system setting includes the type of a reference coordinate system.

In some embodiments, the first field is a Coordinates field. The Coordinates field indicates the type of the reference coordinate system. The type of the reference coordinate system is at least one of an Earth coordinate system or an STA coordinate system.

The STA coordinate system is a coordinate system of a sensing initiator, a coordinate system of a sensing responder, a coordinate system of a sensing transmitter, or a coordinate system of a sensing receiver.

In summary, in the method for sensing measurement according to the embodiments, the information related to the coordinate system is set or negotiated between sensing participants by transmitting or receiving the frame carrying the first field in the sensing measurement process, such that the coordinate system of the azimuth/elevation is clearly indicated, the response sensing procedure operates normally, and the accuracy of the sensing measurement result is ensured.

### 1.1 A frame carrying the Coordinates field is transmitted or received in a sensing session setup phase or a sensing measurement setup phase.

In some embodiments, transmitting or receiving the frame carrying the first field in the sensing measurement process includes at least one of:

transmitting or receiving the frame carrying the Coordinates field in the sensing session setup phase; or

transmitting or receiving the frame carrying the Coordinates field in the sensing measurement setup phase.

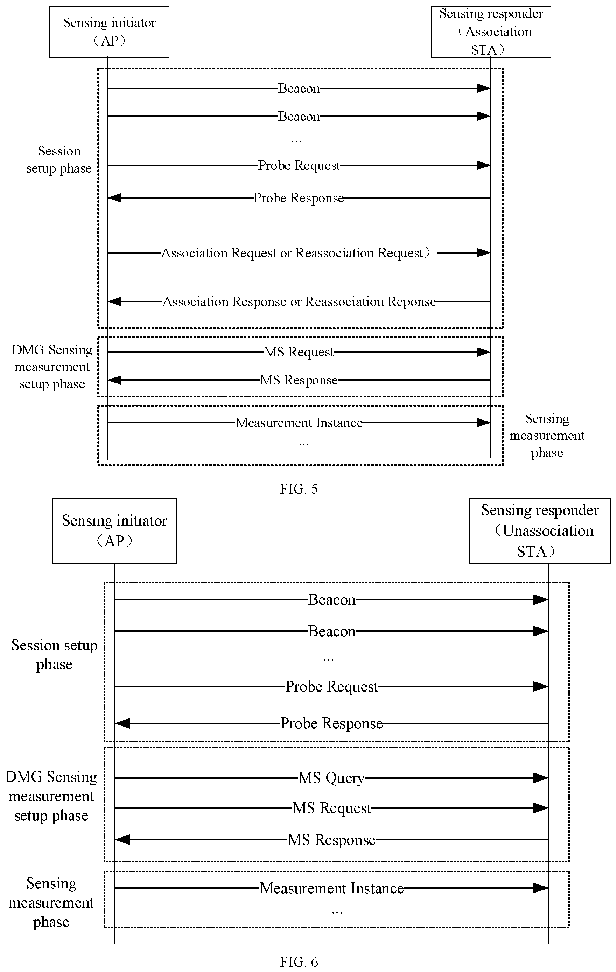

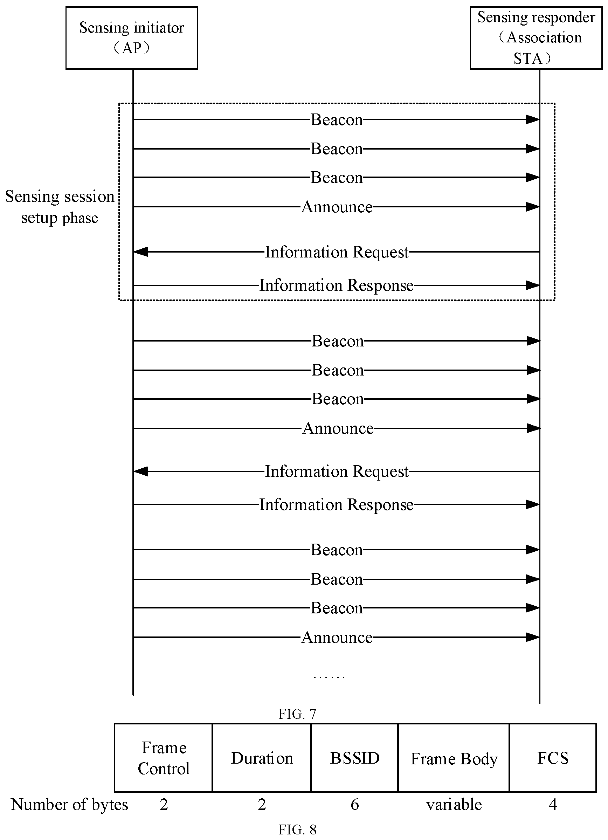

The sensing measurement process at least includes a trigger based (TB) sensing measurement process (shown in FIG. 5), a based non-TB sensing measurement process (shown in FIG. 6), and a passive sensing based sensing measurement process (shown in FIG. 7). The based non-TB is also referred to as a non-trigger based (Non-TB).

FIG. 5 is a schematic diagram of establishment of a sensing measurement procedure between a sensing initiator and a sensing responder according to some embodiments of the present disclosure. Illustratively, the sensing initiator is an AP, and the sensing responder is an association STA.

In the sensing session setup phase, an STA acquires wireless network information of an AP by passive scanning or active scanning to acquire distribution of surrounding wireless networks.

The passive scanning means that the STA passively listens beacon frames periodically broadcast by the AP over a specified channel. The beacon frame carries capability information, a service set identifier (SSID), and the like.

The active scanning means that the STA actively transmits a probe request frame to the AP and receives a probe response frame from the AP. The probe request frame and the probe response frame carry information, such as capability information, the SSID, an extended capability, and the like. The capability information in the different frames refers to the capability information of the device transmitting the current frame.

The STA establishes an association with an AP based on acquired wireless network information of the AP to acquire a full access of the wireless network, such that the STA is an association STA.

In the case that the STA is connected to an AP for the first time, the STA unicasts an association request frame to the AP and receives an association response frame from the AP. The association request frame carries information, such as capability information, a listen interval, the SSID, supported rates, a quality of service (QoS) capability, and the like. The association response frame carries information, such as capability information, a status code, an association identify (AID), an extended capability, and the like.

In the case that the STA is connected to an AP not for the first time, the STA unicasts a reassociation request frame to the AP and receives a reassociation response frame from the AP. The reassociation request frame and the reassociation response frame respectively carry information similar to the association request frame and the association response frame.

In addition, in the sensing measurement setup phase, based on various pieces of capability information interacted between the STA and the AP in the above phase, the STA transmits a sensing measurement setup request frame (MS request frame) to the association STA and receives a sensing MS response frame, such that the sensing measurement is established. The sensing measurement setup request frame carries a null data PPDU (NDP) bandwidth, an NDP type, a report type, and the like. The sensing MS response frame carries a status code, and the like.

Eventually, in a sensing measurement instance phase, a measurement instance is established between the association STA and the AP, the NDP is transmitted and received, and channel sensing is performed.

FIG. 6 is a schematic diagram of establishment of a sensing measurement procedure between a sensing initiator and a sensing responder according to some embodiments of the present disclosure. In the sensing session setup phase, establishment of a sensing procedure between the unassociation STA and the AP is similar to establishment of a sensing procedure between the association STA and the AP. Wireless network information of the AP is scanned using the beacon frame, the probe request frame, and the probe response frame in the procedures.

It is different in that association is not required between the non-association STA and the AP, and the reassociation request frame does not need to be transmitted and the reassociation response frame does not need to be received. In the sensing measurement setup phase, the non-association STA transmits a sensing MS query frame to the AP after scanning to initiate a sensing measurement setup process, and then performs the sensing measurement setup process by receiving the sensing measurement setup request frame and transmitting the sensing measurement setup response frame.

Eventually, in the sensing measurement instance phase, a measurement instance is established between the unassociation STA and the AP, the NDP is transmitted and received, and the channel sensing is performed.

FIG. 7 is a schematic diagram of establishment of a sensing measurement procedure between a sensing initiator and a sensing responder according to some embodiments of the present disclosure. Illustratively, the sensing initiator is an AP, and the sensing responder is an unassociation STA

The STA passively listens a beacon frame and an announce frame that are periodically broadcast by the AP over a specified channel to acquire the wireless network information of the AP. Then, the STA transmits an information request frame to the AP, and the AP transmits an information response frame to the STA upon receipt of the information request frame.

In some embodiments, a structure of the beacon frame is illustrated in FIG. 8 and includes a Frame Control field, a Duration field, a Basic Service Set Identifier (BSSID) field, a Frame Body field, and a Frame Check (FCS) field that are arranged in sequence. The Frame Control field occupies two bytes, the Duration field occupies two bytes, the BSSID field occupies six bytes, the Frame Body field occupies a variable number of bytes, and the Frame Check field occupies four bytes. The Frame Body field of the DMG beacon frame carries at least one of a DMG Sensing Beam Descriptor element or a DMG Sensing Short Capability element.

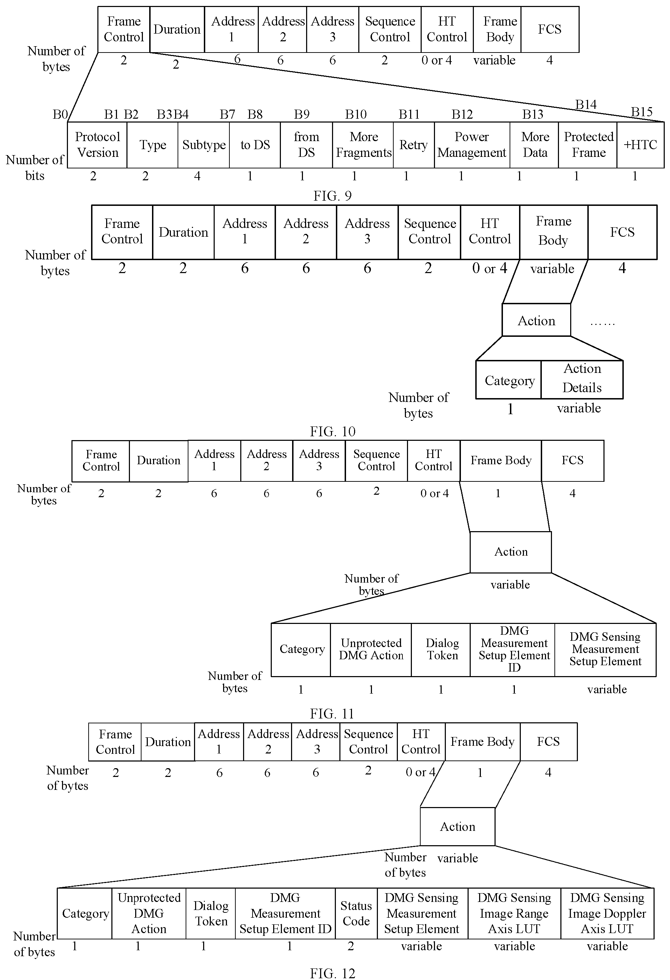

In some embodiments, the association request frame, the association response frame, the reassociation request frame, the reassociation response frame, the probe request frame, and the probe response frame are sub-types of a management frame, and a Type field and a Sub-type field in the Frame Control field jointly indicate the sub-type of the above frame in the management frame. The structure of the management frame is shown in FIG. 9, and includes the Frame Control field, the Duration field, an Address 1 field, an Address 2 field, an Address 3 field, a Sequence Control field, a High-Throughput (HT) Control field, the Frame Body field, and a Frame Check field that are arranged in sequence. The Frame Control field occupies two bytes, the Duration field occupies two bytes, the Address 1 field occupies six bytes, the Address 2 field occupies six bytes, the Address 3 field occupies six bytes, the Sequence Control field occupies two bytes, the HT Control field occupies 0 or four bytes, the Frame Body field occupies a variable number of bytes, and the Frame Check field occupies four bytes.

In some embodiments, the Frame Control field includes a Protocol Version sub-field, a Type sub-field, a Subtype sub-field, a to Distributed System (DS) sub-field, a from DS sub-field, a More Fragments sub-field, a Retry sub-field, a Power Management sub-field, a More Data sub-field, a Protected Frame sub-field, a +High-Throughput Control (+HTC) sub-field that are arranged in sequence. In the present disclosure, the sub-field is referred to as a field.

The Protocol Version sub-field occupies B0-B1, that is, two bytes. The Type sub-field occupies B2-B3, that is, two bytes. The Subtype sub-field occupies B4-B7, that is, four bytes. The to DS sub-field occupies B8, that is, one byte. The from DS sub-field occupies B9, that is, one byte. The More Fragments sub-field occupies B10, that is, one byte. The Retry sub-field occupies B11, that is, one byte. The Power Management sub-field occupies B12, that is, one byte. The More Data sub-field occupies B13, that is, one byte. The Protected Frame sub-field occupies B14, that is, one byte. The +HTC sub-field occupies B15, that is, one byte.

The association request frame, the association response frame, the reassociation request frame, the reassociation response frame, the probe request frame, and the probe response frame carry at least one of the DMG Sensing Beam Descriptor element or the DMG Sensing Short Capability element.

In some embodiments, structures of the announce frame, the information request frame, and the information response frame are illustrated in FIG. 10, and all are structure of the action frame. The action frame is a sub-type of the management frame and is for extending the management frame. A first field in the Frame Body field of the action frame is an Action field. A Category sub-field and an Action Details sub-field are for indicating sub-types of different action frames. Fields and elements in frame Body fields of action frames of different sub-types are different. The structure of the action frame includes the Frame Control field, the Duration field, the Address 1 field, the Address 2 field, the Address 3 field, the Sequence Control field, the HT Control field, the Frame Body field, and the Frame Check field that are arranged in sequence. The Frame Control field occupies two bytes, the Duration field occupies two bytes, the Address 1 field occupies six bytes, the Address 2 field occupies six bytes, the Address 3 field occupies six bytes, the Sequence Control field occupies two bytes, the HT Control field occupies 0 or four bytes, the Frame Body field occupies a variable number of bytes, and the Frame Check field occupies four bytes.

In some embodiments, the Frame Body field includes the Action field, and the Action field includes the Category sub-field and the Action Details sub-field. The Category sub-field occupies one byte, and the Action Details sub-field occupies a variable number of bytes.

The announce frame carries at least one of the DMG Sensing Beam Descriptor element or the DMG Sensing Short Capability element. The information request frame carries at least one of a DMG Beacon Sector Descriptor element or a DMG Passive Sensing Beacon Information element. The information response frame carries an element identifier (ID) of the DMG Passive Sensing Beacon Information element.

In summary, in the sensing session setup phase, the Coordinates field is carried in at least one of the beacon frame, the probe request frame, the probe response frame, the association request frame, the association response frame, the reassociation request frame, the reassociation response frame, or the announce frame between the sensing initiator and the sensing responder.

In the sensing measurement setup phase, the Coordinates field is carried in at least one of the sensing MS query frame, the sensing measurement setup request frame, or the sensing MS response frame between the sensing initiator and the sensing responder.

The structure of the sensing measurement setup request frame is illustrated in FIG. 11, and includes the Frame Control field, the Duration field, the Address 1 field, the Address 2 field, the Address 3 field, the Sequence Control field, the HT Control field, the Frame Body field, and the Frame Check field that are arranged in sequence. The Frame Control field occupies two bytes, the Duration field occupies two bytes, the Address 1 field occupies six bytes, the Address 2 field occupies six bytes, the Address 3 field occupies six bytes, the Sequence Control field occupies two bytes, the HT Control field occupies 0 or four bytes, the Frame Body field occupies one byte, and the Frame Check field occupies four bytes.

In some embodiments, the Frame Body field includes the Action field, and the Action field occupies a variable number of bytes. The Action field includes the Category sub-field, an Unprotected DMG Action sub-field, a Dialog Token sub-field, a DMG Measurement Setup Element ID sub-field, and a DMG Sensing Measurement Setup Element sub-field that are arranged in sequence. The Category sub-field occupies one byte, the Unprotected DMG Action sub-field occupies one byte, the Dialog Token sub-field occupies one byte, the DMG Measurement Setup Element ID sub-field occupies one byte, and the DMG Sensing Measurement Setup Element sub-field occupies a variable number of bytes. The sensing measurement setup request frame carries the DMG Sensing Measurement Setup element.

The structure of the sensing measurement setup response frame is illustrated in FIG. 12, and includes the Frame Control field, the Duration field, the Address 1 field, the Address 2 field, the Address 3 field, the Sequence Control field, the HT Control field, the Frame Body field, and the Frame Check field that are arranged in sequence. The Frame Control field occupies two bytes, the Duration field occupies two bytes, the Address 1 field occupies six bytes, the Address 2 field occupies six bytes, the Address 3 field occupies six bytes, the Sequence Control field occupies two bytes, the HT Control field occupies 0 or four bytes, the Frame Body field occupies one byte, and the Frame Check field occupies four bytes.

In some embodiments, the Frame Body field includes the Action field, and the Action field occupies a variable number of bytes. The Action field includes the Category sub-field, an Unprotected DMG Action sub-field, the Dialog Token sub-field, the DMG Measurement Setup Element ID sub-field, a Status Code sub-field, the DMG Sensing Measurement Setup Element sub-field, a DMG Sensing Image Range Axis Look Up Table sub-field, and a DMG Sensing Image Doppler Axis Look Up Table sub-field that are arranged in sequence. The Category sub-field occupies one byte, the Unprotected DMG Action sub-field occupies one byte, the Dialog Token sub-field occupies one byte, the DMG Measurement Setup Element ID sub-field occupies one byte, the Status Code sub-field occupies two bytes, the DMG Sensing Measurement Setup Element sub-field occupies a variable number of bytes, the DMG Sensing Image Range Axis Look Up Table sub-field occupies a variable number of bytes, and the DMG Sensing Image Doppler Axis Look Up Table sub-field occupies a variable number of bytes. The sensing measurement setup response frame carries the DMG Sensing Measurement Setup element.

### 1.2 The sensing session setup phase

In some embodiments, in the sensing session setup phase, the Coordinates field is carried in at least one of: 1.1.1, a DMG Sensing Beam Descriptor element; 1.1.2, a DMG Beacon Sector Descriptor element; 1.1.3, a DMG Passive Sensing Beacon Information element; or 1.1.4, a DMG Sensing Short Capability element.

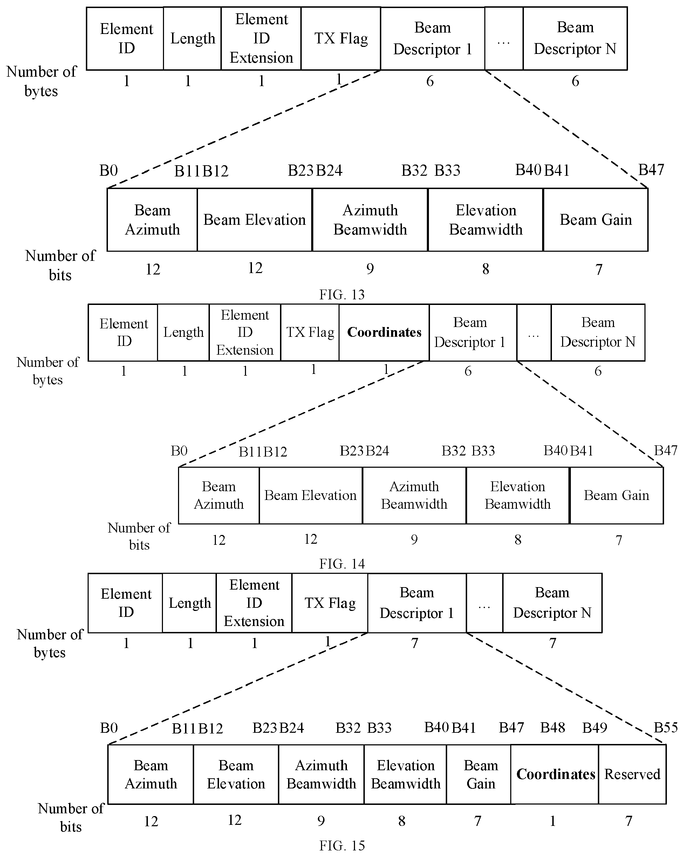

FIG. 13 is a schematic diagram of a structure of a DMG Sensing Beam Descriptor element in some practices. The DMG Sensing Beam Descriptor element includes an Element ID field, a Length field, an Element ID Extension field, a Transmit (TX) Flag field, and a Beam Descriptor 1 field to a Beam Descriptor N field that are arranged in sequence. The Element ID field occupies one byte, the Length field occupies one byte, the Element ID Extension field occupies one byte, the TX Flag field occupies one byte, and each of the Beam Descriptor 1 field to the Beam Descriptor N field occupies six bytes.

In some embodiments, the Beam Descriptor 1 field includes a Beam Azimuth sub-field, a Beam Elevation sub-field, an Azimuth Beamwidth sub-field, an Elevation Beamwidth sub-field, and a Beam Gain sub-field that are arranged in sequence. The Beam Azimuth sub-field occupies B0-B11, that is, 12 bytes. The Beam Elevation sub-field occupies B12-B23, that is, 12 bytes. The Azimuth Beamwidth sub-field occupies B24-B32, that is, nine bytes. The Elevation Beamwidth sub-field occupies B33-B40, that is, eight bytes. The Beam Gain sub-field occupies B41-B47, that is, seven bytes.

The fields in the DMG Sensing Beam Descriptor element have the following meanings.

The TX Flag field indicates a TX beam description or a receive (RX) beam descriptor. The DMG Sensing Beam Descriptor element includes N Beam Descriptor fields. N is a positive integer. In the present disclosure, the sub-field is referred to as a field. The sub-fields in each Beam Descriptor field include the following meanings.

The Beam Azimuth sub-field indicates an azimuth of the beam, with a unit of (360/4096)°, and is referred to as an Azimuth field or an Azimuth sub-field.

The Beam Elevation sub-field indicates an elevation of the beam, with a binary complement encoding mode and a unit of (180/4096)°, ranges from -2048 to 2047, and is referred to as an elevation field or an elevation sub-field.

The Azimuth Beamwidth sub-field includes a 3 dB bandwidth of the beam in an azimuth direction, with a unit of (360/512)°.

The Elevation Beamwidth sub-field includes a 3 dB bandwidth of the beam in an elevation direction, with a unit of (180/256)°.

The Beam Gain sub-field includes gain of the beam, with a unit of 0.5 dB, and a value of 0 means 0 dBi.

The DMG Sensing Beam Descriptor element is carried in a Frame Body field of at least one of the DMG beacon frame, the association request frame, the association response frame, the reassociation request frame, the reassociation response frame, the probe request frame, the probe response frame, or the announce frame.

In the present disclosure, the Coordinates field is added in the DMG Sensing Beam Descriptor element to address the inaccurate indication of the coordinate system of the sensing beam angle.

### 1.2.1.1 First embodiments

The Coordinates field and the N Beam Descriptor fields are in a same level, and the Coordinates field indicate the reference coordinate system of all Beam Azimuth fields and Beam Elevation fields in the DMG Sensing Beam Descriptor element. In the case that values of the Coordinates field are a first value, the Coordinates field indicates an Earth coordinate system. In the case that the values of the Coordinates field are a second value, the Coordinates field indicates an STA coordinate system.

Illustratively, a Coordinates field is added in the DMG Sensing Beam Descriptor element. FIG. 14 is a schematic diagram of a structure of a DMG Sensing Beam Descriptor element according to some embodiments of the present disclosure. The DMG Sensing Beam Descriptor element includes the Element ID field, the Length field, the Element ID Extension field, the TX Flag field, the Coordinates field, and the Beam Descriptor 1 field to the Beam Descriptor N field that are arranged in sequence. The Element ID field occupies one byte, the Length field occupies one byte, the Element ID Extension field occupies one byte, the TX Flag field occupies one byte, the Coordinates field occupies one byte, and each of the Beam Descriptor 1 field to the Beam Descriptor N field occupies six bytes.

In some embodiments, the Beam Descriptor 1 field is the same as the Beam Descriptor 1 field in FIG. 13, which is not described again herein.

The Coordinates field indicates the reference coordinate system of all Beam Azimuth fields and Beam Elevation fields in the DMG Sensing Beam Descriptor element, and values of the Coordinates field are any two values between 0 to 255. Illustratively, the values of 1 of the Coordinates field indicate the Earth coordinate system (for example, the beam azimuth being 0 indicates a north direction, and the beam elevation being 0 indicates a horizon line), and the values of 0 of the Coordinates field indicate an STA coordinate system. In the case that values of an Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates field indicate the Earth coordinate system, and the values of 1 of the Coordinates field indicate an STA coordinate system, which is not limited in the embodiments.

In the embodiments, the Coordinates field is added in the DMG Sensing Beam Descriptor element, such that the Coordinates field indicates the reference coordinate system of all Beam Azimuth fields and Beam Elevation fields in the DMG Sensing Beam Descriptor element. Thus, the overhead is reduced, and the coordinate system of the azimuth/elevation is uniformly indicated to ensure the normal execution of response sensing procedure and the accuracy of the sensing measurement result.

### 1.2.1.2 Second embodiments

Coordinates fields are in one-to-one correspondence to the Beam Descriptor fields, and each of the Coordinates fields indicates the reference coordinate system of the Beam Azimuth field and the Beam Elevation field in the Beam Descriptor field including each of the Coordinates fields. That is, the DMG Sensing Beam Descriptor element includes N Beam Descriptor fields, and sub-fields in each Beam Descriptor field includes the Beam Azimuth field, the Beam Elevation field, and the Coordinates field. N is a positive integer. In the case that the values of the Coordinates field are the first value, the Coordinates field indicates the Earth coordinate system. In the case that the values of the Coordinates field are the second value, the Coordinates field indicates an STA coordinate system.

FIG. 15 is a schematic diagram of a structure of a DMG Sensing Beam Descriptor element according to some embodiments of the present disclosure. The DMG Sensing Beam Descriptor element includes the Element ID field, the Length field, the Element ID Extension field, the TX Flag field, and the Beam Descriptor 1 field to the Beam Descriptor N field that are arranged in sequence. The Element ID field occupies one byte, the Length field occupies one byte, the Element ID Extension field occupies one byte, the TX Flag field occupies one byte, and each of the Beam Descriptor 1 field to the Beam Descriptor N field occupies seven bytes.

In some embodiments, the Beam Descriptor 1 field includes the Beam Azimuth sub-field, the Beam Elevation sub-field, the Azimuth Beamwidth sub-field, the Elevation Beamwidth sub-field, the Beam Gain sub-field, a Coordinates sub-field, and a Reserved sub-field that are arranged in sequence. The Beam Azimuth sub-field occupies B0-B11, that is, 12 bytes. The Beam Elevation sub-field occupies B12-B23, that is, 12 bytes. The Azimuth Beamwidth sub-field occupies B24-B32, that is, nine bytes. The Elevation Beamwidth sub-field occupies B33-B40, that is, eight bytes. The Beam Gain sub-field occupies B41-B47, that is, seven bytes. The Coordinates sub-field occupies B48, that is, one byte. The Reserved sub-field occupies B49-B55, that is, seven bytes.

The Coordinates sub-field indicates the reference coordinate system of the Beam Azimuth field and the Beam Elevation field in the Beam Descriptor field of the Coordinates sub-field. That is, a Coordinates sub-field in an i^{th} Beam Descriptor field indicates the reference coordinate system of the Beam Azimuth field and the Beam Elevation field in an i^{th} Beam Descriptor field. Illustratively, the values of 1 of the Coordinates sub-field indicate the Earth coordinate system (for example, the beam azimuth being 0 indicates the north direction, and the beam elevation being 0 indicates the horizon line), and the values of 0 of the Coordinates north indicate an STA coordinate system. In the case that values of an Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates field indicate the Earth coordinate system (for example, the beam azimuth being 0 indicates the north direction, and the beam elevation being 0 indicates the horizon line), and the values of 1 of the Coordinates field indicate an STA coordinate system, which is not limited in the embodiments.

In the embodiments, the Coordinates sub-field is added in the DMG Sensing Beam Descriptor element, such that the Coordinates sub-field indicates the reference coordinate system of all Beam Azimuth fields and Beam Elevation fields in the Beam Descriptor field. Thus, the coordinate system of the azimuth/elevation is firmly indicated to ensure the normal execution of the response sensing procedure and the accuracy of the sensing measurement result.

### 1.2.2 The DMG Beacon Sector Descriptor element is described.

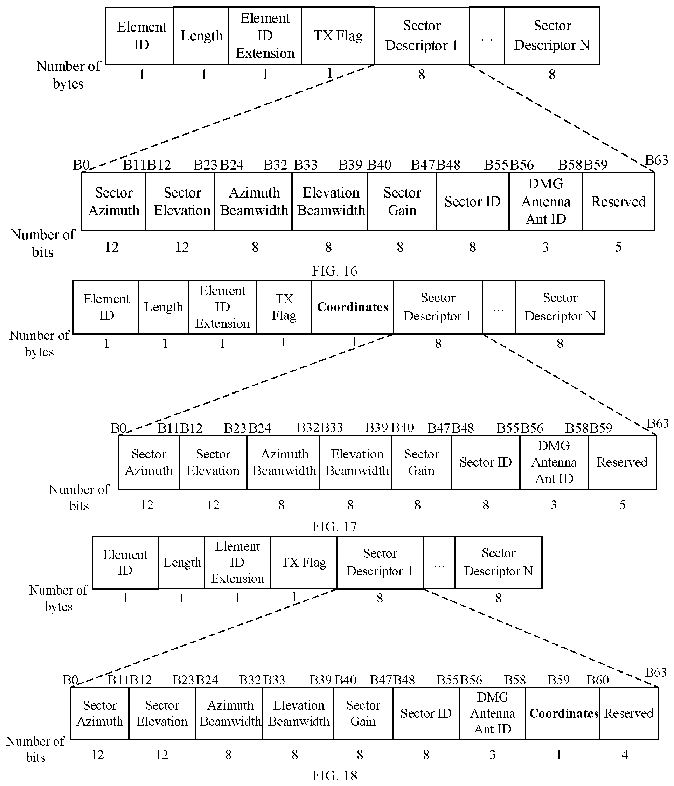

FIG. 16 is a schematic diagram of a structure of a DMG Beacon Sector Descriptor element in some practices. The DMG Beacon Sector Descriptor element includes the Element ID field, the Length field, the Element ID Extension field, the TX Flag field, and the Sector Descriptor 1 field to the Sector Descriptor N field that are arranged in sequence. The Element ID field occupies one byte, the Length field occupies one byte, the Element ID Extension field occupies one byte, the TX Flag field occupies one byte, and each of the Beam Descriptor 1 field to the Beam Descriptor N field occupies eight bytes.

In some embodiments, the Sector Descriptor 1 field includes a Sector Azimuth sub-field, a Sector Elevation sub-field, an Azimuth Beamwidth sub-field, an Elevation Beamwidth sub-field, a Sector Gain sub-field, a Sector ID sub-field, a DMG Antenna (Ant) ID sub-field, and a Reserved sub-field that are arranged in sequence. The Sector Azimuth sub-field occupies B0-B11, that is, 12 bytes. The Sector Elevation sub-field occupies B12-B23, that is, 12 bytes. The Azimuth Beamwidth sub-field occupies B24-B32, that is, nine bytes. The Elevation Beamwidth sub-field occupies B33-B40, that is, eight bytes. The Sector Gain sub-field occupies B40-B47, that is, eight bytes. The Sector ID sub-field occupies B48-B55, that is, eight bytes. The DMG Ant ID sub-field occupies B56-B58, that is, three bytes. The Reserved sub-field occupies B59-B63, that is, five bytes.

The DMG Beacon Sector Descriptor element includes N Sector Descriptor fields. In the present disclosure, the sub-field is referred to as a field. The sub-fields in each Sector Descriptor field include the following meanings.

The Sector Azimuth sub-field indicates an azimuth of the beam, with a unit of (360/4096)°, ranges from 0 to 4095, and is referred to as an Azimuth sub-field.

The Sector Elevation sub-field indicates an elevation of the beam, with a binary complement encoding mode and a unit of (180/4096)°, ranges from -2048 to 2047, and is referred to as an Elevation sub-field.

The Azimuth Beamwidth sub-field includes 3 dB bandwidth of the beam in the azimuth direction, with a unit of (360/256)°.

The Elevation Beamwidth sub-field includes 3 dB bandwidth of the beam in the elevation direction, with a unit of (180/256)°.

The Sector Gain sub-field includes gain of the beam, with a unit of 0.5 dB, and ranges from 0 to 255.

The Sector ID sub-field is the same as the Beacon ID field used in the beacon, and is described by the azimuth and the elevation.

The DMG Ant ID sub-field is the same as the DMG Ant field used in the beacon.

The DMG Beacon Sector Descriptor element is carried in a Frame Body field of the association response frame.

In the present disclosure, the Coordinates field is added in the DMG Beacon Sector Descriptor element to address the inaccurate indication of the coordinate system of the sensing beam angle.

### 1.2.2.1 First embodiments

The DMG Beacon Sector Descriptor element includes N Sector Descriptor fields. Each Sector Descriptor field includes a Sector Azimuth field and a Sector Elevation field. N is a positive integer. The Coordinates field and the N Sector Descriptor fields are in a same level, and the Coordinates field indicates the reference coordinate system of all Sector Azimuth fields and Sector Elevation fields in the DMG Beacon Sector Descriptor element. In the case that values of the Coordinates field are a first value, the Coordinates field indicates the Earth coordinate system. In the case that the values of the Coordinates field are a second value, the Coordinates field indicates an STA coordinate system.

Illustratively, the Coordinates field is added in the DMG Beacon Sector Descriptor element. FIG. 17 is a schematic diagram of a structure of a DMG Beacon Sector Descriptor element according to some embodiments of the present disclosure. The DMG Beacon Sector Descriptor element includes the Element ID field, the Length field, the Element ID Extension field, the TX Flag field, the Coordinates field, and the Sector Descriptor 1 field to the Sector Descriptor N field that are arranged in sequence. The Element ID field occupies one byte, the Length field occupies one byte, the Element ID Extension field occupies one byte, the TX Flag field occupies one byte, the Coordinates field occupies one byte, and each of the Sector Descriptor 1 field to the Sector Descriptor N field occupies eight bytes.

In some embodiments, sub-fields in the Sector Descriptor 1 field are the same as the sub-fields in the Sector Descriptor 1 field in FIG. 16, which are not described again herein.

The Coordinates field indicates the reference coordinate system of all Beam Azimuth fields and Beam Elevation fields in the DMG Beacon Sector Descriptor element, and values of the Coordinates field are any two values between 0 to 255. Illustratively, the values of 1 of the Coordinates field indicate the Earth coordinate system (for example, the sector azimuth being 0 indicates the north direction, and the sector elevation being 0 indicates the horizon line), and the values of 0 of the Coordinates field indicate an STA coordinate system. In the case that the values of the Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates field indicate the Earth coordinate system, and the values of 1 of the Coordinates field indicate an STA coordinate system, which is not limited in the embodiments.

In the embodiments, the Coordinates field is added in the DMG Beacon Sector Descriptor element, such that the Coordinates field indicates the reference coordinate system of all Sector Azimuth fields and Sector Elevation fields in the DMG Beacon Sector Descriptor element. Thus, the overhead is reduced, and the coordinate system of the azimuth/elevation is uniformly indicated to ensure the normal execution of response sensing procedure and the accuracy of the sensing measurement result.

### 1.2.2.2 Second embodiments

The DMG Beacon Sector Descriptor element includes N Sector Descriptor fields. Each Sector Descriptor field includes the Sector Azimuth field, the Sector Elevation field, and the Coordinates field. N is a positive integer. The Coordinates fields are in one-to-one correspondence to the Sector Descriptor fields, and each of the Coordinates fields indicates the reference coordinate system of the Sector Azimuth field and the Sector Elevation field in the Sector Descriptor field including the each of the Coordinates fields. In the case that the values of the Coordinates field are the first value, the Coordinates field indicates the Earth coordinate system. In the case that the values of the Coordinates field are the second value, the Coordinates field indicates an STA coordinate system.

Illustratively, one Coordinates sub-field is added in the DMG Beacon Sector Descriptor element. FIG. 18 is a schematic diagram of a structure of a DMG Beacon Sector Descriptor element according to some embodiments of the present disclosure. The DMG Beacon Sector Descriptor element includes the Element ID field, the Length field, the Element ID Extension field, the TX Flag field, and the Sector Descriptor 1 field to the Sector Descriptor N field that are arranged in sequence. The Element ID field occupies one byte, the Length field occupies one byte, the Element ID Extension field occupies one byte, the TX Flag field occupies one byte, and each of the Sector Descriptor 1 field to the Sector Descriptor N field occupies eight bytes.

In some embodiments, the Sector Descriptor 1 field includes the Sector Azimuth sub-field, the Sector Elevation sub-field, the Azimuth Beamwidth sub-field, the Elevation Beamwidth sub-field, the Sector Gain sub-field, the Sector ID sub-field, the DMG Ant ID sub-field, the Coordinates sub-field, and the Reserved sub-field that are arranged in sequence. The Sector Azimuth sub-field occupies B0-B11, that is, 12 bytes. The Sector Elevation sub-field occupies B12-B23, that is, 12 bytes. The Azimuth Beamwidth sub-field occupies B24-B32, that is, nine bytes. The Elevation Beamwidth sub-field occupies B33-B40, that is, eight bytes. The Sector Gain sub-field occupies B40-B47, that is, eight bytes. The Sector ID sub-field occupies B48-B55, that is, eight bytes. The DMG Ant ID sub-field occupies B56-B58, that is, three bytes. The Coordinates sub-field occupies B59, that is, one byte. The Reserved sub-field occupies B60-B63, that is, four bytes.

The Coordinates sub-field indicates the reference coordinate system of the Sector Azimuth field and the Sector Elevation field in the Sector Descriptor field of the Coordinates sub-field. Illustratively, the values of 1 of the Coordinates sub-field indicate the Earth coordinate system (for example, the sector azimuth being 0 indicates the north direction, and the sector elevation being 0 indicates the horizon line), and the values of 0 of the Coordinates north indicate an STA coordinate system. In the case that values of an Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates sub-field indicate the Earth coordinate system, and the values of 1 of the Coordinates sub-field indicate an STA coordinate system, which is not limited in the embodiments.

In the embodiments, the Coordinates sub-field is added in the DMG Beacon Sector Descriptor element, such that the Coordinates sub-field indicates the reference coordinate system of all Sector Azimuth fields and Sector Elevation fields in the Beacon Sector Descriptor element. Thus, the coordinate system of the azimuth/elevation is firmly indicated to ensure the normal execution of the response sensing procedure and the accuracy of the sensing measurement result.

### 1.2.3 The DMG Passive Sensing Beacon Information element is described.

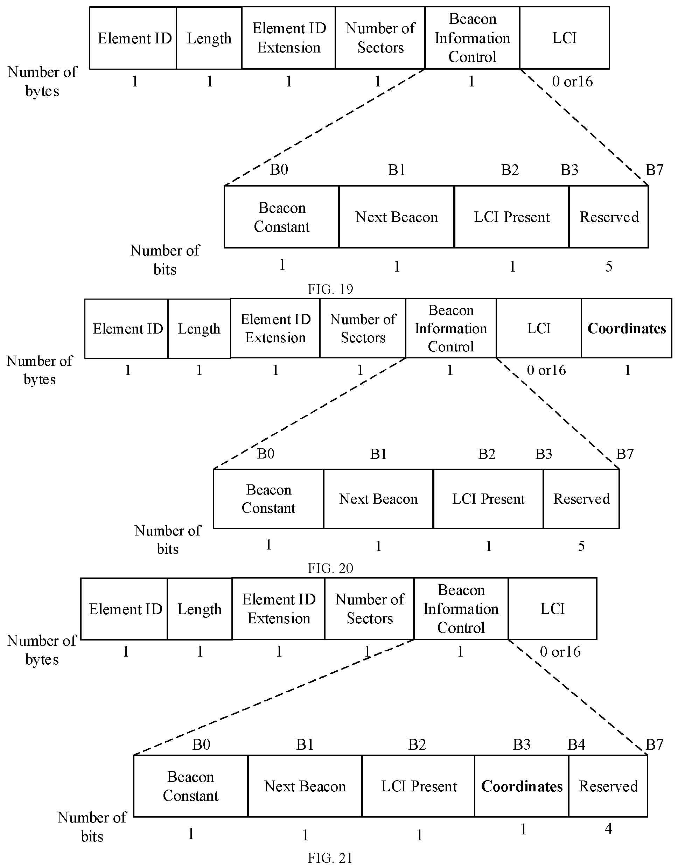

FIG. 19 is a schematic diagram of a structure of a DMG Passive Sensing Beacon Information element in some practices. The DMG Passive Sensing Beacon Information element includes the Element ID field, the Length field, the Element ID Extension field, a Number of Sectors field, a Beacon Information Control field, a Local Communication Interface (LCI) field that are arranged in sequence. The Element ID field occupies one byte, the Length field occupies one byte, the Element ID Extension field occupies one byte, the Number of Sectors field occupies one byte, the Beacon Information Control field occupies one byte, and the LCI field occupies one byte or 16 bytes.

In some embodiments, the Beacon Information Control field includes a Beacon Constant sub-field, a Next Beacon sub-field, an LCI Present sub-field, and a Reserved sub-field that are arranged in sequence. The Beacon Constant sub-field occupies B0, that is, one byte. The Next Beacon sub-field occupies B1, that is, one byte. The LCI Present sub-field occupies B2, that is, one byte. The Reserved sub-field occupies B3-B7, that is, five bytes. In the present disclosure, the sub-field is referred to as a field.

The fields in the DMG Passive Sensing Beacon Information element include the following meanings.

The LCI Present field indicates whether an LCI field is present in the DMG Passive Sensing Beacon Information element. A value of 1 of the LCI Present field indicate that the LCI field is present in the DMG Passive Sensing Beacon Information element, and the value of 0 of the LCI Present field indicate that the LCI field is not present in the DMG Passive Sensing Beacon Information element.

The DMG Passive Sensing Beacon Information element is carried in a Frame Body field of at least one of an information request frame or an information response frame.

In the present disclosure, the Coordinates field is added in the DMG Passive Sensing Beacon Information element to address the inaccurate indication of the coordinate system of the sensing beam angle.

### 1.2.3.1 First embodiments

The DMG Passive Sensing Beacon Information element includes the Beacon Information Control field. The Coordinates field and the Beacon Information Control field are in a same level, and the Coordinates field indicates the reference coordinate system of all Sector Azimuth fields and Sector Elevation fields in the DMG Beacon Sector Descriptor element carried in the frame. In the case that the values of the Coordinates field are the first value, the Coordinates field indicates the Earth coordinate system. In the case that the values of the Coordinates field are the second value, the Coordinates field indicates an STA coordinate system.

Illustratively, the Coordinates field is added in the DMG Passive Sensing Beacon Information element. FIG. 20 is a schematic diagram of a structure of a DMG Passive Sensing Beacon Information element according to some embodiments of the present disclosure. The DMG Passive Sensing Beacon Information element includes the Element ID field, the Length field, the Element ID Extension field, the Number of Sectors field, the Beacon Information Control field, the LC field, and the Coordinates field that are arranged in sequence. The Element ID field occupies one byte, the Length field occupies one byte, the Element ID Extension field occupies one byte, the Number of Sectors field occupies one byte, the Beacon Information Control field occupies one byte, the LCI field occupies one byte or 16 bytes, and the Coordinates field occupies one byte.

In some embodiments, sub-fields in the Beacon Information Control field are the same as the sub-fields in the Beacon Information Control field in FIG. 19, which are not described again herein.

The Coordinates field indicates the reference coordinate system of all Sector Azimuth sub-fields and Sector Elevation sub-fields in the DMG Beacon Sector Descriptor element carried in the frame, and values of the Coordinates field are any two values between 0 to 255. Illustratively, the values of 1 of the Coordinates field indicate the Earth coordinate system (for example, the sector azimuth being 0 indicates the north direction, and the sector elevation being 0 indicates the horizon line), and the values of 0 of the Coordinates field indicate an STA coordinate system. In the case that the values of the Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates field indicate the Earth coordinate system, and the values of 1 of the Coordinates field indicate an STA coordinate system, which is not limited in the embodiments.

In the embodiments, the Coordinates field is added in the DMG Passive Sensing Beacon Information element, such that the Coordinates field indicates the reference coordinate system of all Sector Azimuth sub-fields and Sector Elevation sub-fields in the DMG Beacon Sector Descriptor element carried in the frame. Thus, the overhead is reduced, and the coordinate system of the azimuth/elevation is uniformly indicated to ensure the normal execution of response sensing procedure and the accuracy of the sensing measurement result.

### 1.2.3.2 Second embodiments

The DMG Passive Sensing Beacon Information element includes the Beacon Information Control field. The sub-fields in the Beacon Information Control field include the Coordinates field. The Coordinates field indicates the reference coordinate system of the Sector Azimuth field and the Sector Elevation field in the DMG Beacon Sector Descriptor field carried in the frame. In the case that the values of the Coordinates field are the first value, the Coordinates field indicates the Earth coordinate system. In the case that the values of the Coordinates field are the second value, the Coordinates field indicates an STA coordinate system.

Illustratively, one Coordinates sub-field is added in the DMG Passive Sensing Beacon Information element. FIG. 21 is a schematic diagram of a structure of a DMG Passive Sensing Beacon Information element according to some embodiments of the present disclosure. The DMG Passive Sensing Beacon Information element includes the Element ID field, the Length field, the Element ID Extension field, the Number of Sectors field, the Beacon Information Control field, and the LC field that are arranged in sequence. The Element ID field occupies one byte, the Length field occupies one byte, the Element ID Extension field occupies one byte, the Number of Sectors field occupies one byte, the Beacon Information Control field occupies one byte, and the LC field occupies one byte or 16 bytes.

In some embodiments, the Beacon Information Control field includes the Beacon Constant sub-field, the Next Beacon sub-field, the LCI Present sub-field, the Coordinates sub-field, and the Reserved sub-field that are arranged in sequence. The Beacon Constant sub-field occupies B0, that is, one byte. The Next Beacon sub-field occupies B1, that is, one byte. The LCI Present sub-field occupies B2, that is, one byte. The Coordinates sub-field occupies B3, that is, one byte. The Reserved sub-field occupies B4-B7, that is, four bytes. In the present disclosure, the sub-field is referred to as a field.

The Coordinates sub-field indicates the reference coordinate system of all Sector Azimuth sub-fields and Sector Elevation sub-fields in the DMG Beacon Sector Descriptor element carried in the frame. Illustratively, the values of 1 of the Coordinates sub-field indicate the Earth coordinate system (for example, the sector azimuth being 0 indicates the north direction, and the sector elevation being 0 indicates the horizon line), and the values of 0 of the Coordinates sub-field indicate an STA coordinate system. In the case that the values of the Earth Coordinates field in the DMG Sensing Short Capability element are 0, the values of the Earth Coordinates field are unique (only 1 or only 0), and the Earth Coordinates field indicates an STA coordinate system.

In different embodiments, the values of 0 of the Coordinates sub-field indicate the Earth coordinate system, and the values of 1 of the Coordinates sub-field indicate an STA coordinate system, which is not limited in the embodiments.

In the embodiments, the Coordinates sub-field is added in the DMG Passive Sensing Beacon Information element, such that the Coordinates sub-field indicates the reference coordinate system of all Sector Azimuth sub-fields and Sector Elevation sub-fields in the DMG Beacon Sector Descriptor element carried in the frame. Thus, the coordinate system of the azimuth/elevation is firmly indicated to ensure the normal execution of response sensing procedure and the accuracy of the sensing measurement result.

### 1.2.4 The DMG Sensing Short Capability element is described.

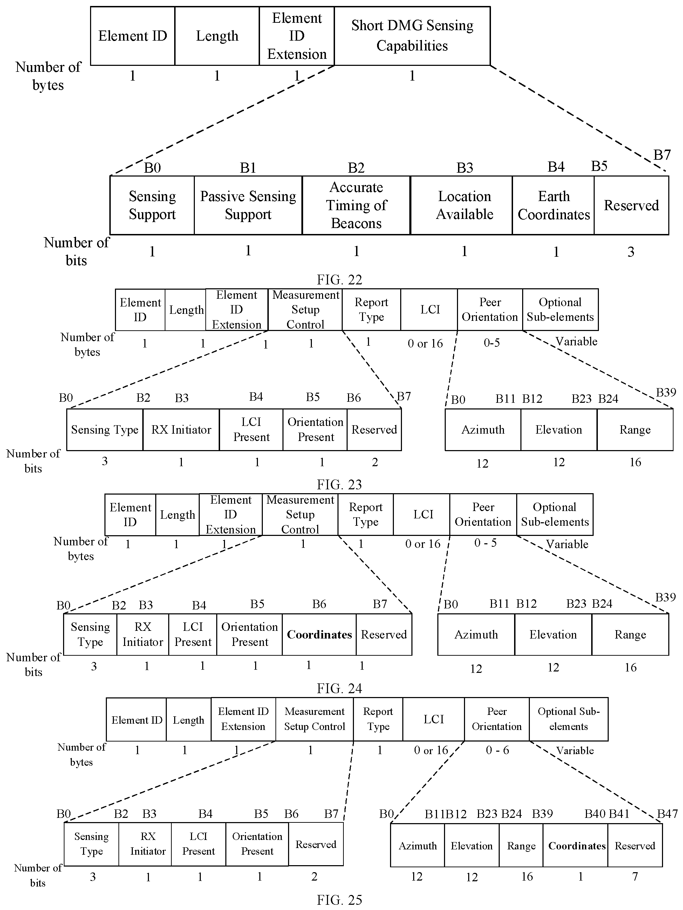

FIG. 22 is a schematic diagram of a structure of a DMG Sensing Short Capability element in some practices. The DMG Sensing Short Capability element includes the Element ID field, the Length field, the Element ID Extension field, and the Short DMG Sensing Capabilities field that are arranged in sequence. The Element ID field occupies one byte, the Length field occupies one byte, the Element ID Extension field occupies one byte, and the Short DMG Sensing Capabilities field occupies one byte.

In some embodiments, the Short DMG Sensing Capabilities field includes a Sensing Support sub-field, a Passive Sensing Support sub-field, an Accurate Timing of Beacons sub-field, a Location Available sub-field, an Earth Coordinates sub-field, and a Reserved sub-field that are arranged in sequence. The Sensing Support sub-field occupies B0, that is, one byte. The Passive Sensing Support sub-field occupies B1, that is, one byte. The Accurate Timing of Beacons sub-field occupies B2, that is, one byte. The Location Available sub-field occupies B3, that is, one byte. The Earth Coordinates sub-field occupies B4, that is, one byte. The Reserved sub-field occupies B5-B7, that is, three bytes.

The fields in the DMG Passive Sensing Beacon Information element include the following meanings.

The Sensing Support sub-field indicates whether to support any DMG sensing type.

The Passive Sensing Support sub-field indicates whether to support the DMG passive sensing by providing the beacon direction and an optional position information.

The Accurate Timing of Beacons sub-field indicates accurate sampling of time interval between the beacons.

The Location Available sub-field indicates that the AP provides the position information for the passive sensing.

The Earth Coordinates sub-field indicates that the STA transmits the azimuth and the elevation in the Earth coordinate system (the azimuth being 0 indicates the north direction, and the elevation being 0 indicates the horizon line). In the case that the value of the sub-field is 0, the azimuth and the elevation are relative to an STA coordinate system.

The DMG Sensing Short Capabilities element is carried in a Frame Body field of at least one of the DMG beacon frame, the association request frame, the association response frame, the reassociation request frame, the reassociation response frame, the probe request frame, the probe response frame, the information response frame, or the announce frame.

In the present disclosure, the meanings of the Earth Coordinates sub-fields in the DMG Sensing Short Capabilities field are modified to address the inaccurate indication of the coordinate system of the sensing beam angle. In the present disclosure, the sub-field is referred to as a field.

The Coordinates field in the method is the Earth Coordinates sub-field in the DMG Sensing Short Capability element. In the case that values of the Earth Coordinates sub-field is the first value, the Earth Coordinates sub-field indicates that the STA only transmits the azimuth and the elevation in the Earth coordinate system. That is, modification of the Earth Coordinates sub-field means that the STA only transmits the azimuth and the elevation in the Earth coordinate system (the azimuth being 0 indicates the north direction, and the elevation being 0 indicates the horizon line). In the case that the value of the sub-field is 0, the azimuth and the elevation are relative to an STA coordinate system.

In the embodiments, the meaning of the Earth Coordinates sub-field in the DMG Sensing Short Capability element is modified, such that the Coordinates field indicates the reference coordinate system of the Azimuth sub-field and the Elevation sub-field in the frame of the element. Thus, the coordinate system of the azimuth/elevation is clearly indicated to ensure the normal execution of response sensing procedure and the accuracy of the sensing measurement result.

### 1.3 The sensing measurement setup phase

In the sensing measurement setup phase, the Coordinates field is carried in a the DMG Sensing Measurement Setup element, and indicates the reference coordinate system of the Azimuth field and the Elevation sub-field in the DMG Sensing Measurement Setup element.

In some embodiments, the sensing initiator transmits or receives the frame carrying the Coordinates field to/from the sensing responder.

In some embodiments, the sensing responder transmits or receives the frame carrying the Coordinates field to/from the sensing initiator.

### 1.3.1 The DMG Sensing Measurement Setup element is described.

FIG. 23 is a schematic diagram of a DMG Sensing Measurement Setup element in some practices. The DMG Sensing Measurement Setup element includes the Element ID field, the Length field, the Element ID Extension field, a Measurement Setup Control field, a Report Type field, an LCI field, a Peer Orientation field, and an Optional Sub-elements field that are arranged in sequence. The Element ID field occupies one byte, the Length field occupies one byte, the Element ID Extension field occupies one byte, the Measurement Setup Control field occupies one byte, the Report Type field occupies one byte, the LCI field occupies 0 byte or 16 bytes, the Peer Orientation field occupies 0 to five bytes, and the Optional Sub-elements field occupies a variable number of bytes.

In some embodiments, the Measurement Setup Control field includes a Sensing Type sub-field, an RX Initiator sub-field, an LCI Present sub-field, an Orientation Present sub-field, and a Reserved sub-field that are arranged in sequence. The Sensing Type sub-field occupies B0-B2, that is, three bytes. The RX Initiator sub-field occupies B3, that is, one byte. The LCI Present sub-field occupies B4, that is, one byte. The Orientation Present sub-field occupies B5, that is, one byte. The Reserved sub-field occupies B6-B7, that is, two bytes. In the present disclosure, the sub-field is a referred to as a field.

In some embodiments, the Peer Orientation field includes an Azimuth sub-field, an Elevation sub-field, and a Range sub-field that are arranged in sequence. The Azimuth sub-field occupies B0-B11, that is, 12 bytes. The Elevation sub-field occupies B12-B23, that is, 12 bytes. The Range sub-field occupies B24-B39, that is, 16 bytes.

The DMG Sensing Measurement Setup element carries information for setting DMG sensing measurement, and is carried in a Frame Body field of at least one of a sensing measurement setup request frame, a sensing measurement setup response frame, a DMG sensing measurement setup request frame, or a DMG sensing measurement setup response frame.

The DMG Sensing Measurement Setup element includes the Element ID field, the Length field, the Element ID Extension field, the Measurement Setup Control field, the Report Type field, the LCI field, the Peer Orientation field, and the Optional Sub-elements field. The Measurement Setup Control field includes following fields.

The Sensing Type field indicates the type of the DMG sensing measurement. Values and meanings thereof are shown in Table 1.

**Table 1**

| Value | Meaning |
|---|---|
| 0 | Coordinated Monostatic |
| 1 | Coordinated Bistatic |
| 2 | Bistatic |
| 3 | Multistatic |
| 4-7 | Reserved |

The RX Initiator field indicates that the sensing initiator is a sensing receiver or a sensing transmitter in the bistatic sensing. A value of 1 indicates that the sensing initiator is the sensing receiver, and the value of 0 indicates that the sensing initiator is the sensing transmitter.

The LCI Present field indicates whether the LCI field is present in the DMG Sensing Measurement Setup element. A value of 1 indicates that the LCI field is present in the DMG Sensing Measurement Setup element, and the value of 0 indicates that the LCI field is not present in the DMG Sensing Measurement Setup element.

The Orientation Present field indicates whether the Peer Orientation field is present in the DMG Sensing Measurement Setup element. A value of 1 indicates that the Peer Orientation field is present in the DMG Sensing Measurement Setup element, and the value of 0 indicates that the Peer Orientation field is not present in the DMG Sensing Measurement Setup element.

In addition, the Report Type field in the DMG Sensing Measurement Setup element indicates the type that the sensing initiator expects to be reported by the sensing responder. Values and meanings thereof are shown in Table 2.

**Table 2**

| Value | Meaning |
|---|---|
| 0 | No Report |
| 1 | CSI |
| 2 | DMG Sensing Image Direction |
| 3 | DMG Sensing Image Range-Doppler |
| 4 | DMG Sensing Image Range-Direction |
| 5 | DMG Sensing Image Doppler-Direction |
| 6 | DMG Sensing Image Range-Doppler Direction |
| 7 | Target |
| 8-255 | Reserved |

In addition, the LCI field carries the LCI field in the position configuration information report.

The Peer Orientation field indicates a direction and a range of a peer device, and includes a Direction Angle sub-field, an Elevation sub-field, and a Range sub-field.

The Optional Sub-elements field includes 0 or several sub-elements, and all sub-elements and a sequence of sub-elements are shown in Table 3.

**Table 3**

| Sub-element ID | Sub-element name | Extendibility |
|---|---|---|
| 1 | TX Beam List | Yes |
| 2 | RX Beam List | Yes |
| 3 | DMG Sensing Scheduling | Yes |
| 4-255 | Reserved | No |

### 1.3.1.1 First embodiments

The Coordinates field is a sub-field of the Measurement Setup Control field, and the Azimuth field and the Elevation field are sub-fields of the Peer Orientation field.

In the case that values of the Earth Coordinates field in the DMG Sensing Short Capability element is the first value, values of the Coordinates field are unique and are for indicating that the reference coordinate system of the Azimuth field and the Elevation field is an STA coordinate system.

In the case that the values of the Earth Coordinates field in the DMG Sensing Short Capability element are the second value, and the values of the Coordinates field are the first value, the Coordinates field indicates that the reference coordinate system of the Azimuth field and the Elevation field is an STA coordinate system.

In the case that the values of the Earth Coordinates field in the DMG Sensing Short Capability element are the second value, and the values of the Coordinates field are the second value, the Coordinates field indicates that the reference coordinate system of the Azimuth field and the Elevation field is the Earth coordinate system.

FIG. 24 is a schematic diagram of a structure of a DMG Sensing Measurement Setup element according to some embodiments of the present disclosure. The DMG Sensing Measurement Setup element includes the Element ID field, the Length field, the Element ID Extension field, the Measurement Setup Control field, the Report Type field, the LCI field, the Peer Orientation field, and the Optional Sub-elements field that are arranged in sequence. The Element ID field occupies one byte, the Length field occupies one byte, the Element ID Extension field occupies one byte, the Measurement Setup Control field occupies one byte, the Report Type field occupies one byte, the LCI field occupies 0 byte or 16 bytes, the Peer Orientation field occupies 0 to five bytes, and the Optional Sub-elements field occupies a variable number of bytes.

In some embodiments, the Measurement Setup Control field includes the Sensing Type sub-field, the RX Initiator sub-field, the LCI Present sub-field, the Orientation Present sub-field, the Coordinates sub-field, and the Reserved sub-field that are arranged in sequence. The Sensing Type sub-field occupies B0-B2, that is, three bytes. The RX Initiator sub-field occupies B3, that is, one byte. The LCI Present sub-field occupies B4, that is, one byte. The Orientation Present sub-field occupies B5, that is, one byte. The Coordinates sub-field occupies B6, that is, one byte. The Reserved sub-field occupies B7, that is, one byte. In the present disclosure, the sub-field is referred to as a field.

In some embodiments, the Peer Orientation field includes the Azimuth sub-field, the Elevation sub-field, and the Range sub-field that are arranged in sequence. The Azimuth sub-field occupies B0-B11, that is, 12 bytes. The Elevation sub-field occupies B12-B23, that is, 12 bytes. The Range sub-field occupies B24-B39, that is, 16 bytes.

Illustratively, the Coordinates sub-field is added in the Measurement Setup Control field. In the case that a value of Orientation Present sub-field in the Measurement Setup Control field of the Coordinates sub-field is 0, the Coordinates sub-field is reserved.

In the case that values of an Earth Coordinates field in the DMG Sensing Short Capability element are 0, the values of the sub-field are unique (only 1 or only 0), and the sub-field indicates that the Azimuth sub-field and the Elevation sub-field in the Peer Orientation field are relative to an STA coordinate system.

In the case that values of an Earth Coordinates field in the DMG Sensing Short Capability element are 1, the sub-field indicates the reference coordinate system of the Azimuth sub-field and the Elevation sub-field in the Peer Orientation field in the DMG Sensing Measurement Setup element. Illustratively, the values of 1 of the Coordinates sub-field indicate the Earth coordinate system, and the values of 0 of the Coordinates sub-field indicate an STA coordinate system.

In the embodiments, the Coordinates sub-field is added in the Measurement Setup Control field in the DMG Sensing Measurement Setup element, such that the Coordinates sub-field indicates the reference coordinate system of the Azimuth sub-field and the Elevation sub-field in the Peer Orientation field in the DMG Sensing Measurement Setup element. Thus, the normal execution of response sensing procedure is ensured, and the accuracy of the sensing measurement result is ensured.

### 1.3.1.2 Second embodiments

The Coordinates field, the Azimuth field, and the Elevation field are sub-fields of the Peer Orientation field.

In the case that the values of the Earth Coordinates field in the DMG Sensing Short Capability element is the first value, values of the Coordinates field are unique and are for indicating that the reference coordinate system of the Azimuth field and the Elevation field is an STA coordinate system.

In the case that the values of the Earth Coordinates field in the DMG Sensing Short Capability element are the second value, and the values of the Coordinates field are the first value, the Coordinates field indicates that the reference coordinate system of the Azimuth field and the Elevation field is an STA coordinate system.

In the case that the values of the Earth Coordinates field in the DMG Sensing Short Capability element are the second value, and the values of the Coordinates field are the second value, the Coordinates field indicates that the reference coordinate system of the Azimuth field and the Elevation field is the Earth coordinate system.

FIG. 25 is a schematic diagram of a structure of a DMG Sensing Measurement Setup element according to some embodiments of the present disclosure. The DMG Sensing Measurement Setup element includes the Element ID field, the Length field, the Element ID Extension field, the Measurement Setup Control field, the Report Type field, the LCI field, the Peer Orientation field, and the Optional Sub-elements field that are arranged in sequence. The Element ID field occupies one byte, the Length field occupies one byte, the Element ID Extension field occupies one byte, the Measurement Setup Control field occupies one byte, the Report Type field occupies one byte, the LCI field occupies 0 byte or 16 bytes, the Peer Orientation field occupies 0 to six bytes, and the Optional Sub-elements field occupies a variable number of bytes.

In some embodiments, the Measurement Setup Control field includes the Sensing Type sub-field, the RX Initiator sub-field, the LCI Present sub-field, the Orientation Present sub-field, and the Reserved sub-field that are arranged in sequence. The Sensing Type sub-field occupies B0-B2, that is, three bytes. The RX Initiator sub-field occupies B3, that is, one byte. The LCI Present sub-field occupies B4, that is, one byte. The Orientation Present sub-field occupies B5, that is, one byte. The Reserved sub-field occupies B6 to B7, that is, two bytes. In the present disclosure, the sub-field is a referred to as a field.

In some embodiments, the Peer Orientation field includes the Azimuth sub-field, the Elevation sub-field, the Range sub-field, the Coordinates sub-field, and the Reserved sub-field that are arranged in sequence. The Azimuth sub-field occupies B0-B11, that is, 12 bytes. The Elevation sub-field occupies B12-B23, that is, 12 bytes. The Range sub-field occupies B24-B39, that is, 16 bytes. The Coordinates sub-field occupies B40, that is, one byte. The Reserved sub-field occupies B41-B47, that is, seven bytes.

Illustratively, the Coordinates sub-field is added in the Measurement Setup Control field.

In the case that values of the Earth Coordinates field in the DMG Sensing Short Capability element are 0, the values of the sub-field are unique (only 1 or only 0), and the sub-field indicates that the Azimuth sub-field and the Elevation sub-field in the Peer Orientation field of the sub-field are relative to an STA coordinate system.

In the case that values of the Earth Coordinates field in the DMG Sensing Short Capability element are 1, the sub-field indicates the reference coordinate system of the Azimuth sub-field and the Elevation sub-field in the Peer Orientation field. Illustratively, the values of 1 of the Coordinates sub-field indicate the Earth coordinate system, and the values of 0 of the Coordinates sub-field indicate an STA coordinate system.

In the embodiments, the Coordinates sub-field is added in the DMG Sensing Measurement Setup element, such that the Coordinates sub-field indicates the reference coordinate system of the Azimuth sub-field and the Elevation sub-field in the Peer Orientation field in the DMG Sensing Measurement Setup element. Thus, the normal execution of response sensing procedure is ensured, and the accuracy of the sensing measurement result is ensured.

### 1.3.1.3 Third embodiments

No new sub-field is added, and meanings of the Azimuth field and the Elevation field are modified. The Azimuth field and the Elevation field are sub-fields of the Peer Orientation field.

The Azimuth field includes the azimuth of the addressed STA measured by the STA transmitting the frame, with the unit of (360/4096)°, ranging from 0 to 4095. The coordinate system of the azimuth is a coordinate system related to orientation of the STA transmitting the frame.

The Elevation field includes the elevation of the addressed STA measured by the STA transmitting the frame, with the unit of (180/4096)°, ranging from -2048 to 2047. The coordinate system of the elevation is a coordinate system related to orientation of the STA transmitting the frame.

In the embodiments, the meanings of the Azimuth field and the Elevation field are modified, such that the normal execution of response sensing procedure is ensured, and the accuracy of the sensing measurement result is ensured.

As unsolved problems are present in the design of the frame format in some practices, for example, formats and lengths of the monostatic PPDU are not specified in parallel coordinated monostatic sensing, the monostatic PPDU may be overlapped with the sensing measurement report frame to generate interference to affect normal execution of sensing procedure. The method for sensing measurement according to the present disclosure can efficiently solve the problem.

Millimeter wave coordinated monostatic sensing measurement instances are described.

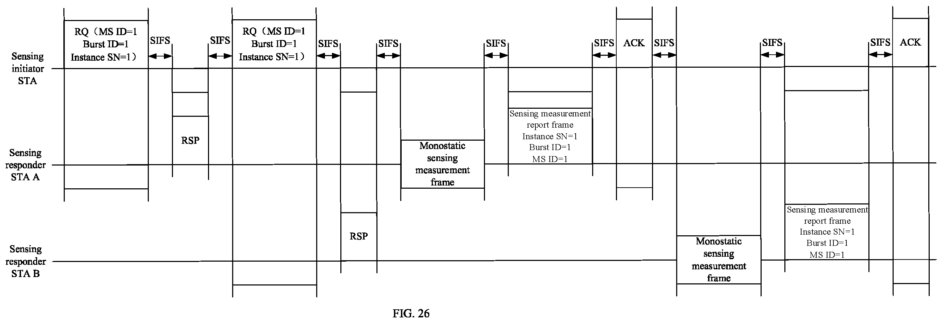

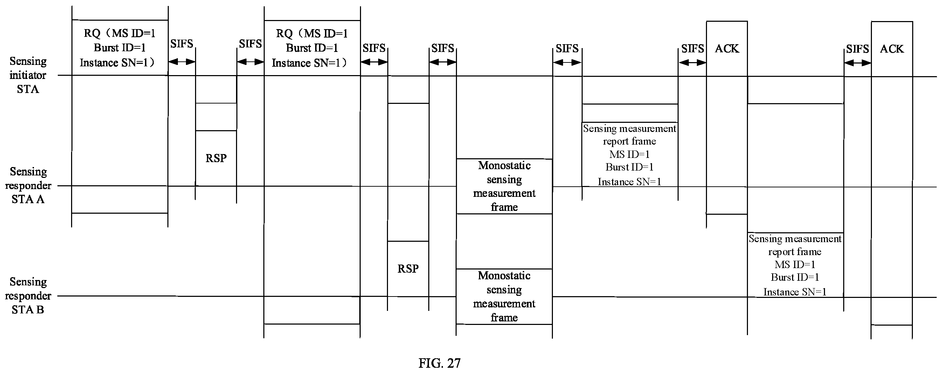

The millimeter wave coordinated monostatic sensing measurement instance may be in two modes, that is, a sequential mode and a parallel mode. Illustratively, FIG. 26 is a schematic diagram of a sequential mode instance of millimeter wave coordinated monostatic sensing measurement according to some embodiments of the present disclosure, and FIG. 27 is a schematic diagram of a parallel mode instance of millimeter wave coordinated monostatic sensing measurement according to some embodiments of the present disclosure.

As shown in FIG. 26 and FIG. 27, similarities between the sequential mode and the parallel mode are that the sensing initiator needs to transmits a millimeter wave sensing request frame to each sensing respondent in the initial phase of the sensing measurement instance, and each sensing responder needs to reply a millimeter wave sensing response frame to the sensing initiator within a short interframe space (SIFS) duration. A DMG sensing request is also referred to as an RQ, and a DMG sensing response is also referred to as an RSP.

As shown in FIG. 26 and FIG. 27, differences between the sequential mode and the parallel mode are that each sensing responder sequentially self-transmits and self-receives a monostatic sensing measurement frame to sense the environment and transmits a sensing measurement report frame to the sensing initiator within the SIFS duration in the sequential mode, and each sensing responder concurrently transmits and receives the monostatic sensing measurement frame to sense the environment and sequentially transmits DMG sensing measurement report frames (sensing measurement report frames) to the sensing initiator in the parallel mode.

It should be noted that in FIG. 26 and FIG. 27, boxes above the horizontal line corresponding to the sensing initiator or the sensing responder represent frames transmitted by the device, boxes (blank boxes) below the horizontal line represent frames received by the device, and the transmitted frames corresponds to the received frames. Boxes on the horizontal line corresponding to the sensing responder represent frames self-transmitted and self-received by the sensing responder, such as the monostatic sensing measurement frame self-transmitted and self-received by the sensing responder. For example, in FIG. 26, the sensing initiator transmits the RQ (represented by the box above the horizontal line corresponding to the sensing initiator) to the sensing responder STA A, and the sensing responder STA A receives the RQ (represented by the blank box below the horizontal line corresponding to the sensing responder STA A) accordingly. For meanings of the blank boxes in the other accompanying drawings in the present disclosure, reference may be made to the above description, which are not described again herein.

The DMG sensing request frame is described hereinafter.

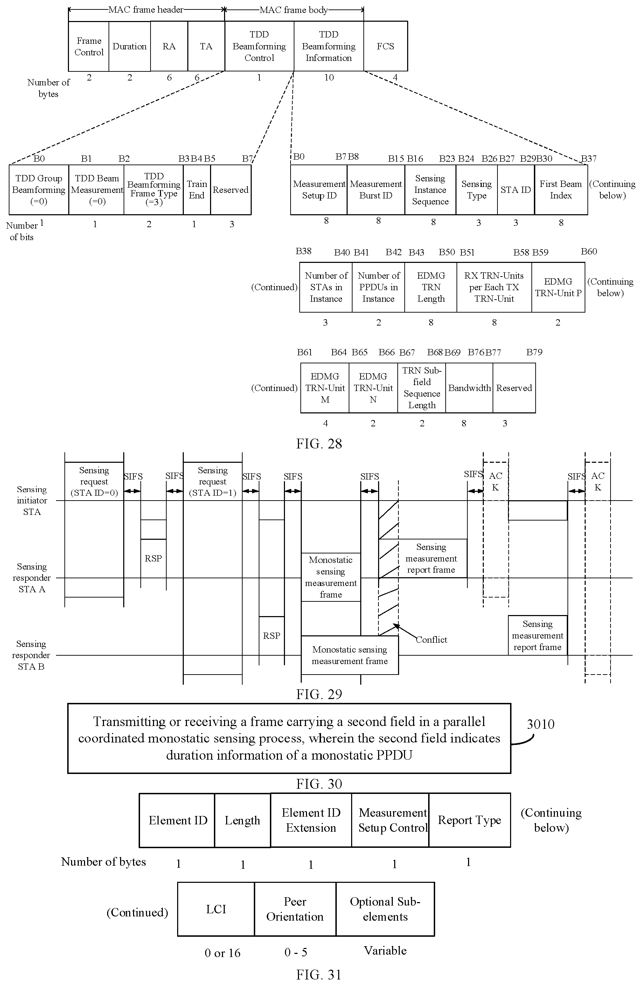

FIG. 28 is a schematic diagram of a format of a sensing request frame in some practices. The sensing request frame includes a MAC frame header, a MAC frame body, and a Frame Check field. The MAC frame header includes a Frame Control field, a Duration field, a Receiver Address (RA) field, and a Transmitter Address (TA) field that are arranged in sequence. The MAC frame body includes a TDD Beamforming Control field and a TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies ten bytes, and the Frame Check field occupies four bytes.

In some embodiments, the TDD Beamforming Control field includes a TDD Group Beamforming sub-field, a TDD Beam Measurement sub-field, a TDD Beamforming Frame Type sub-field, a Train End sub-field, and a Reserved sub-field that are arranged in sequence. The TDD Group Beamforming sub-field occupies B0, that is, one byte, with a value of 0. The TDD Beam Measurement sub-field occupies B1, that is, one byte, with a value of 0. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes a Measurement Setup ID sub-field, a Measurement Burst ID sub-field, a Measurement Instance Sequence sub-field, a Sensing Type sub-field, an STA ID sub-field, a First Beam Index sub-field, a Number of STAs in Instance sub-field, a Number of PPDUs in Instance sub-field, an Enhanced DMG (EDMG) Token Ring Network (TRN) Length sub-field, an RX TRN-Units per Each TX TRN-Unit sub-field, an EDMG TRN-Unit P sub-field, an EDMG TRN-Unit M sub-field, an EDMG TRN-Unit N sub-field, a TRN Sub-field Sequence Length sub-field, a Bandwidth sub-field, and a Reserved sub-field that are arranged in sequence. The Measurement Setup ID sub-field occupies B0 to B7, that is, eight bytes. The Measurement Burst ID sub-field occupies B8 to B15, that is, eight bytes. The Measurement Instance Sequence sub-field occupies B16 to B23, that is, eight bytes. The Sensing Type sub-field occupies B24 to B26, that is, three bytes. The STA ID sub-field occupies B27 to B29, that is, three bytes. The First Beam Index sub-field occupies B30 to B37, that is, eight bytes. The Number of STAs in Instance sub-field occupies B38 to B40, that is, three bytes. The Number of PPDUs in Instance sub-field occupies B41 to B42, that is, two bytes. The EDMG TRN Length sub-field occupies B43 to B50, that is, eight bytes. The RX TRN-Units per Each TX TRN-Unit sub-field occupies B51 to B58, that is, eight bytes. The EDMG TRN-Unit P sub-field occupies B59 to B60, that is, two bytes. The EDMG TRN-Unit M sub-field occupies B61 to B64, that is, four bytes. The EDMG TRN-Unit N sub-field occupies B65 to B66, that is, two bytes. The TRN Sub-field Sequence Length sub-field occupies B67 to B68, that is, two bytes. The Bandwidth sub-field occupies B69 to B76, that is, eight bytes. The Reserved sub-field occupies B77 to B79, that is, three bytes.

Fields in the TDD Beamforming Information field in the DMG sensing request frame have the following meanings.

The Measurement Setup ID sub-field indicates an ID of the sensing measurement setup related to the frame.

The Measurement Burst ID sub-field indicates an ID of the sensing measurement burst related to the frame.

The Measurement Instance Sequence sub-field indicates a sequential number of a sensing measurement instance in a measurement burst.

The Sensing Type sub-field indicates a sensing type of the request frame. Values and meanings thereof are shown in Table 4.

**Table 4**

| Value | Meaning |
|---|---|
| 0 | Coordinated Monostatic |
| 1 | Coordinated Bistatic |
| 2 | Multi static |
| 3 | Reserved |

The STA ID sub-field indicates a sequence of an STA participating in measurement in a sensing measurement instance.

The First Beam Index sub-field indicates an index of a transmit beam first used in a sensing measurement instance.

The Number of STAs in Instance sub-field indicates the number of STAs participating in measurement in a sensing measurement instance.

The Number of PPDUs in Instance sub-field indicates the number of PPDUs in a sensing measurement instance.

The EDMG TRN Length sub-field indicates the number of TRN-units in a PPDU.

The RX TRN-Units per Each TX TRN-Unit sub-field indicates the number of TRN-units continuously transmitted in a same direction.

The EDMG TRN-Unit P sub-field indicates the number of TRN sub-fields with a beam direction aligned with a peer device in a TRN-unit.

The EDMG TRN-Unit M sub-field indicates the number of TRN sub-fields with a variable beam direction in a TRN-unit.

The EDMG TRN-Unit N sub-field indicates the number of TRN sub-fields continuously transmitted in a same beam direction in TRN-Unit-M TRN sub-fields.

The TRN Sub-field Sequence Length sub-field indicates a length of a Gray sequence used in each TRN sub-field.

The Bandwidth sub-field indicates a bandwidth used for transmitting the TRN sub-field.

As formats and lengths of the monostatic PPDU are not specified in the parallel coordinated monostatic sensing, the monostatic PPDU may be overlapped with the sensing measurement report frame to generate interference. FIG. 29 is a schematic flowchart of parallel coordinated monostatic sensing measurement according to some embodiments of the present disclosure. One sensing initiator (the STA) and two sensing responders (the STA A and the STA B) participate in the procedure, and the procedure includes following processes (from left to right).
(1) The sensing initiator transmits a DMG sensing request frame to the STA A, in which the "Number of STAs in Instance" sub-field is set to 2, the "Number of PPDUs in Instance" sub-field is set to 1, and the "STA ID" sub-field is set to 0.
(2) Subsequent to the SIFS duration, the STA A replies a DMG sensing response frame to the sensing initiator.
(3) Subsequent to the SIFS duration, the sensing initiator transmits a DMG sensing request frame to the STAB, in which the "Number of STAs in Instance" sub-field is equal to 2, the "Number of PPDUs in Instance" sub-field is set to 1, and the "STA ID" sub-field is set to 1.
(4) Subsequent to the SIFS duration, the STAB replies a DMG sensing response frame to the sensing initiator.
(5) Subsequent to the SIFS duration, the STA A and the STAB self-transmit and self-receive a monostatic sensing measurement frame concurrently to sense the environment.
(6) Subsequent to the SIFS duration, the STA A transmits a DMG sensing measurement report frame to the sensing initiator to report a sensing measurement result.
(7) Subsequent to the SIFS duration, the sensing initiator replies an acknowledge (ACK) frame to the STA A.
(8) Subsequent to the SIFS duration, the sensing initiator transmits a DMG sensing report poll frame to the STA B to trigger the STA B to report a sensing measurement result.
(9) Subsequent to the SIFS duration, the STA B transmits a DMG sensing measurement report frame to the sensing initiator to report a sensing measurement result.
(10) Subsequent to the SIFS duration, the sensing initiator replies an ACK frame to the STA B.

It should be noted that the processes (7) and (10) are optional processes. The above embodiments only include two sensing responders. For a case including more sensing responders, subsequent sensing responders are triggered by the above method to transmit a DMG sensing measurement report frame.

As shown in FIG. 29, in the above processes, in the case that a length of a monostatic sensing measurement frame (a monostatic PPDU) self-transmitted and self-received by the STA B is greater than a length of a monostatic sensing measurement frame self-transmitted and self-received by the STA A, the monostatic sensing measurement frame self-transmitted and self-received by the STA B is overlapped with the monostatic sensing measurement frame self-received by the STA A, such that interference is generated between the STA A and the STA B.

A method for sensing measurement is provided to solve the problem of the interference between the STA A and the STA B. FIG. 30 is a flowchart of a method for sensing measurement according to some embodiments of the present disclosure. The method is applicable to a sensing participant, and includes the following processes.

In S3010, a frame carrying a second field is transmitted or received in a parallel coordinated monostatic sensing process, wherein the second field indicates duration information of a monostatic physical layer protocol data unit PPDU.

Two solutions are provided in the present disclosure to solve interference between the STA A and the STA B.

In first solution, the sensing responder actively informs the sensing initiator the duration information of the monostatic PPDU used by the sensing responder, and the sensing initiator selects an appropriate transmit time of the DMG sensing poll frame based on the information and a rule. Illustratively, the sensing responder 1 and the sensing responder 2 informs the sensing initiator that the duration of the monostatic PPDU is t1 and t2, and t1 is greater than t2, the sensing initiator transmits the DMG sensing poll frame within the SIFS after the duration t1. Illustratively, the duration information of the monostatic PPDU in the first solution means actual duration information of transmitting the monostatic PPDU by the sensing responder.

In the parallel coordinated monostatic sensing process, the sensing responder transmits the frame carrying the second field to the sensing initiator, and the frame is the DMG sensing measurement setup response frame or the DMG sensing response frame.

In the parallel coordinated monostatic sensing process, the sensing initiator receives the frame carrying the second field from the sensing responder, and the frame is the DMG sensing measurement setup response frame or the DMG sensing response frame.

In the embodiments of the first solution, the sensing initiator selects the appropriate transmit time of the DMG sensing poll frame based on the following rule.

In the coordinated monostatic sensing instance, in the case that the instance is in a parallel mode, the sensing initiator transmits a first DMG sensing poll frame within the SIFS after the transmission of the monostatic PPDU with a longest duration to trigger the sensing responder to report the sensing measurement result.

In second solution, the sensing responder passively receives from duration configuration information of the monostatic PPDU the sensing initiator the duration used by the sensing responder, and transmits an appropriate monostatic PPDU based on the information. Meanwhile, the sensing initiator selects the appropriate transmit time of the DMG sensing poll frame based on the duration configuration information of the monostatic PPDU. Illustratively, the duration configuration information of the monostatic PPDU of the sensing initiator is t3, durations of the monostatic PPDU transmitted by the sensing responder 1 and the sensing responder 2 are not greaten than t3. Illustratively, the duration information of the monostatic PPDU in the second solution means a maximum transmit duration of the monostatic PPDU required by the sensing initiator, and an actual transmit duration of the monostatic PPDU transmitted by the sensing responder is not greater than the maximum transmit duration of the monostatic PPDU required by the sensing initiator.

In the parallel coordinated monostatic sensing process, the sensing initiator transmits the frame carrying the second field to the sensing responder, and the frame is the DMG sensing measurement setup request frame or the DMG sensing request frame.

In the parallel coordinated monostatic sensing process, the sensing responder receives the frame carrying the second field from the sensing initiator, and the frame is the DMG sensing measurement setup request frame or the DMG sensing request frame.

In the embodiments of the second solution, the sensing initiator selects the appropriate transmit time of the DMG sensing poll frame based on the following rule.

In the coordinated monostatic sensing instance, in the case that the coordinated monostatic sensing instance is in the parallel mode, the sensing responder transmits the monostatic PPDU meeting requirements based on the configuration information of the sensing initiator.

In the coordinated monostatic sensing instance, in the case that the coordinated monostatic sensing instance is in the parallel mode, the sensing initiator transmits the first DMG sensing poll frame within the SIFS after the transmission of the monostatic PPDU with the longest duration to trigger the sensing responder to report the sensing measurement result.

### 2.1 The first solution

The sensing responder reports the duration information of the monostatic PPDU to the sensing initiator in the sensing measurement setup phase. In the embodiments, the second field is carried in a DMG Sensing Measurement Setup element. Specifically, the second field is carried in a Coordinated Monostatic Specific Configuration Optional sub-element of the DMG Sensing Measurement Setup element.

FIG. 31 is a schematic diagram of a structure of a DMG Sensing Measurement Setup element in some practices. The DMG Sensing Measurement Setup element includes the Element ID field, the Length field, the Element ID Extension field, the Measurement Setup Control field, the Report Type field, the LCI field, the Peer Orientation field, and the Optional Sub-elements field that are arranged in sequence. The Element ID field occupies one byte, the Length field occupies one byte, the Element ID Extension field occupies one byte, the Measurement Setup Control field occupies one byte, the Report Type field occupies one byte, the LCI field occupies 0 byte or 16 bytes, the Peer Orientation field occupies 0 to five bytes, and the Optional Sub-elements field occupies a variable number of bytes.

Illustratively, a new sub-element type is defined in the Optional Sub-elements field in the DMG Sensing Measurement Setup element. The newly defined Coordinated Monostatic Specific Configuration Optional sub-element is shown in Table 5.

**Table 5**

| Sub-element ID | Sub-element name | Extendibility |
|---|---|---|
| 1 | TX Beam List | Yes |
| 2 | RX Beam List | Yes |
| 3 | DMG Sensing Scheduling | Yes |
| 4 | Coordinated Monostatic Specific Configuration | Yes |
| 5-255 | Reserved | No |

### 2.1.1 First embodiments

The second field is a Duration of Monostatic PPDUs without TRN field in the Coordinated Monostatic Specific Configuration Optional sub-element. The Coordinated Monostatic Specific Configuration Optional sub-element further includes at least one of a Sub-element ID field or a Length field.

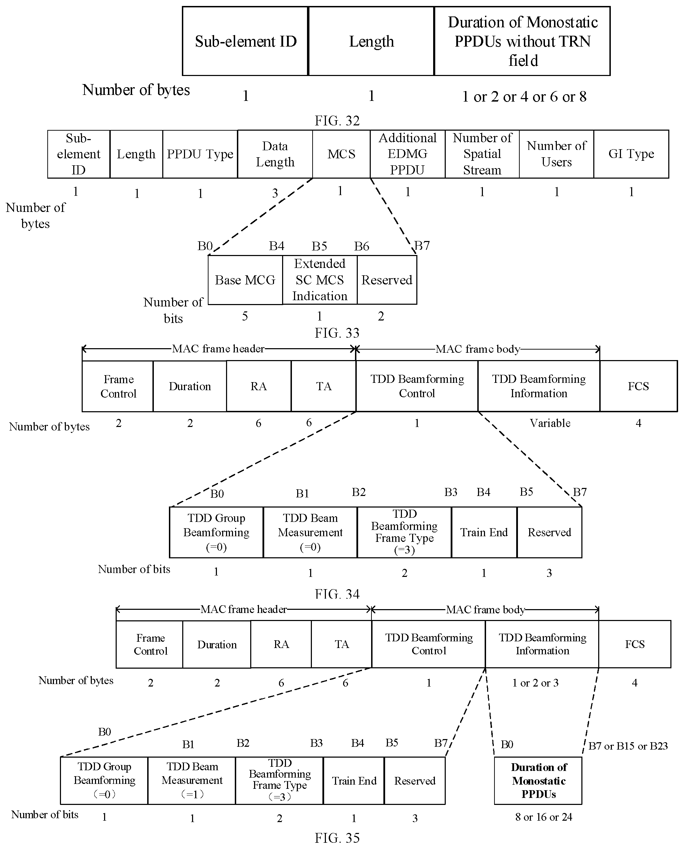

Illustratively, the detailed frame format of the Coordinated Monostatic Specific Configuration Optional sub-element is shown in FIG. 32. The Coordinated Monostatic Specific Configuration Optional sub-element incudes the Sub-element ID field, the Length field, and the Duration of Monostatic PPDUs without TRN field. The Sub-element ID field occupies one byte, the Length field occupies one byte, and the Duration of Monostatic PPDUs without TRN field occupies one, two, dour, six, or eight bytes.

A value of the Sub-element ID field is any integer from 4 to 255, and a value of 4 is used as an example.

The Length field indicates the number of bytes of the element in addition to the Sub-element ID field and the Length field.

The Duration of Monostatic PPDUs without TRN field indicates a duration of the monostatic PPDU (the duration of the TRN field is removed, which is fixed) used by the device in the coordinated monostatic sensing instance, with a unit of Timing Synchronization Function (TSF) time unit.

In some embodiments, the second field is a Duration of Monostatic PPDUs in the Coordinated Monostatic Specific Configuration Optional sub-element. The Coordinated Monostatic Specific Configuration Optional sub-element further includes at least one of the Sub-element ID field or the Length field.

Illustratively, the Coordinated Monostatic Specific Configuration Optional sub-element incudes the Sub-element ID field, the Length field, and the Duration of Monostatic PPDUs field. Other fields are the same as the above description, which are not described again.

The Duration of Monostatic PPDUs field indicates the duration of the monostatic PPDU used by the device in the coordinated monostatic sensing instance, with a unit of TSF time unit.

### 2.1.2 Second embodiments

The second field is a Data Length field in the Coordinated Monostatic Specific Configuration Optional sub-element. Illustratively, the detailed frame format of the Coordinated Monostatic Specific Configuration Optional sub-element is shown in FIG. 33.

The Coordinated Monostatic Specific Configuration Optional sub-element incudes the Sub-element ID field, the Length field, a PPDU Type field, a Data Length field, a Modulation and Coding Scheme (MCS) field, an Additional EDMG PPDU field, a Number of Spatial Streams field, a Number of Users field, and a Guard Interval (GI) Type field that are arranged in sequence. The Sub-element ID field occupies one byte, the Length field occupies one byte, the PPDU Type field occupies one byte, the Data Length field occupies three bytes, the MCS field occupies one byte, the Additional EDMG PPDU field occupies one byte, the Number of Spatial Streams field occupies one byte, the Number of Users field occupies one byte, and the GI Type field occupies one byte.

In some embodiments, the MCS field includes a Base MCG sub-field, an Extended SC MCS Indication sub-field, and a Reserved sub-field that are arranged in sequence. The Base MCG sub-field occupies B0 to B4, that is, five bytes. The Extended SC MCS Indication sub-field occupies B5, that is, one byte. The Reserved sub-field occupies B6 to B4, that is, two bytes.

The value of the Sub-element ID field is any integer from 4 to 255, and a value of 4 is used as an example herein.

The Length field indicates the number of bytes of the element in addition to the Sub-element ID field and the Length field.

The PPDU Type field indicates the type pf the monostatic PPDU used by the device in the coordinated monostatic sensing instance. Values and meanings thereof are shown in Table 6.

**Table 6**

| Value | Meaning |
|---|---|
| 0 | EDMG control mode PPDU |
| 1 | EDMG SC mode PPDU |
| 2 | EDMG OFDM mode PPDU |
| 3 | Non-EDMG control mode PPDU |
| 4 | Non-EDMG SC mode PPDU |

The Data Length field indicates a length of the PSDU carried in the monostatic PPDU used by the device in the coordinated monostatic sensing instance, with a unit of byte.

The Base MCG sub-field and the Extended SC MCS Indication sub-field have coincident values and meanings of a Base MCG sub-field and an Extended SC MCS Indication sub-field in L-Header in the monostatic PPDU. In the case that the PPDU Type field indicates the "EDMG control mode PPDU," the "EDMG SC mode PPDU," or the "EDMG OFDM mode PPDU," the Extended SC MCS Indication sub-field is reserved.

The Additional EDMG PPDU field has a coincident value and a coincident meaning of an Additional PPDU field in L-Header in the monostatic PPDU. A value of 1 indicates that a monostatic PPDU is immediately followed by another PPDU (without a leading code), without an interval of SIF duration. A value of 0 indicates that no additional PPDU follows the monostatic PPDU.

The Number of Spatial Streams field has a coincident value and a coincident meaning of a Number of Spatial Streams field in EDMG-Header-A in the monostatic PPDU, and indicates a number of spatial streams in the monostatic PPDU transmitted by the device in the coordinated monostatic sensing instance.

The Number of Users field occupies one byte indicates the number of users in the monostatic PPDU transmitted by the device in the coordinated monostatic sensing instance.

The GI Type field has a coincident value and a coincident meaning of a GI Length field in L-Header in the monostatic PPDU, and indicates a type of the GI used by the monostatic PPDU transmitted by the device in the coordinated monostatic sensing instance. Values and meanings thereof are shown in Table 7.

**Table 7**

| Value | Meaning |
|---|---|
| 0 | Short GI |
| 1 | Ordinary GI |
| 2 | Long GI |
| 3 | Reserved |

In the embodiments, the second field is carried in the Duration of Monostatic PPDUs field, the Duration of Monostatic PPDUs without TRN field, or the Data Length field in the Coordinated Monostatic Specific Configuration Optional sub-element, and each sensing responder only needs to transmit the duration information of the monostatic PPDU once in the sensing measurement setup, such that the signaling overhead is less.

The sensing responder reports the duration information of the monostatic PPDU to the sensing initiator in the sensing measurement instance phase. In the embodiments, the second field is carried in a TDD Beamforming field, and is the Duration of Monostatic PPDUs field, the Duration of Monostatic PPDUs without TRN field, or the Data Length field in the TDD Beamforming field.

A TDD Beamforming frame is described.

FIG. 34 is a schematic diagram of a format of a Time-Division Duplexing (TDD) beamforming frame in some practices. The TDD Beamforming frame is a Control frame. The TDD Beamforming frame includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies a variable number of bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 0. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

The fields of the MAC frame header of the TDD Beamforming frame have following meanings.

The Frame Control field indicates information such as the type of the MAC frame, and includes information indicating that the frame is the TDD Beamforming frame.

The Duration field indicates a length of a transmit duration of the frame.

The RA field indicates an MAC address of the frame receiver.

The TA field indicates an MAC address of the frame transmitter.

The TDD Beamforming Frame Type field indicates a type of the TDD Beamforming frame. Values and meanings thereof are shown in Table 8.

**Table 8**

| Value | Meaning |
|---|---|
| 0 | TDD Sector Sweep (SSW) |
| 1 | TDD SSW Feedback |
| 2 | TDD SSW Ack |
| 3 | DMG Sensing |

As listed in Table 8, the values of 0, 1, and 2 of the TDD Beamforming Frame Type field indicate that the TDD Beamforming frame is of a type related to the beam training. The type is not correlated with the method according to the embodiments of the present disclosure. The value of 3 indicates that the TDD Beamforming frame is of a type related to the DMG sensing.

In the case that the value of the TDD Beamforming Frame Type field is 3, the TDD Group Beamforming field and the TDD Beam Measurement field jointly indicate usage of the TDD beamforming frame in the DMG sensing. Values and meanings thereof are shown in Table 9.

**Table 9**

| Value of TDD Group Beamforming field | Value of TDD Beam Measurement field | Usage of frame |
|---|---|---|
| 0 | 0 | DMG Sensing Request |
| 0 | 1 | DMG Sensing Response |
| 1 | 0 | DMG Sensing Poll |
| 1 | 1 | Reserved |

As listed in Table 9, in the case that the value of the TDD Group Beamforming field is 0 and the value of the TDD Beam Measurement field is 0, the TDD beamforming frame is the DMG sensing request frame; in the case that the value of the TDD Group Beamforming field is 0 and the value of the TDD Beam Measurement field is 1, the TDD Beamforming frame is the DMG sensing response frame; and in the case that the value of the TDD Group Beamforming field is 1 and the value of the TDD Beam Measurement field is 0, the TDD Beamforming frame is the DMG sensing poll frame.

### 2.1.3 Third embodiments

In the case that the second field is the Duration of Monostatic PPDUs field in the TDD Beamforming field, as shown in FIG. 35, a structure of a DMG sensing response frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies one or two or three bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 1. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes the Duration of Monostatic PPDUs sub-field. The Duration of Monostatic PPDUs sub-field occupies B0 to B7, B0 to B15, or B0 to B23, that is, eight bytes, 16 bytes, or 24 bytes.

The Duration of Monostatic PPDUs sub-field is added in the TDD Beamforming Information field, and the sub-field is reserved in the case that the sensing measurement is not the coordinated monostatic sensing. The sub-field indicates a duration of the monostatic PPDU to be transmitted by the sensing responder in the sensing measurement instance of the frame with a unit of TSF time unit.

### 2.1.4 Fourth embodiments

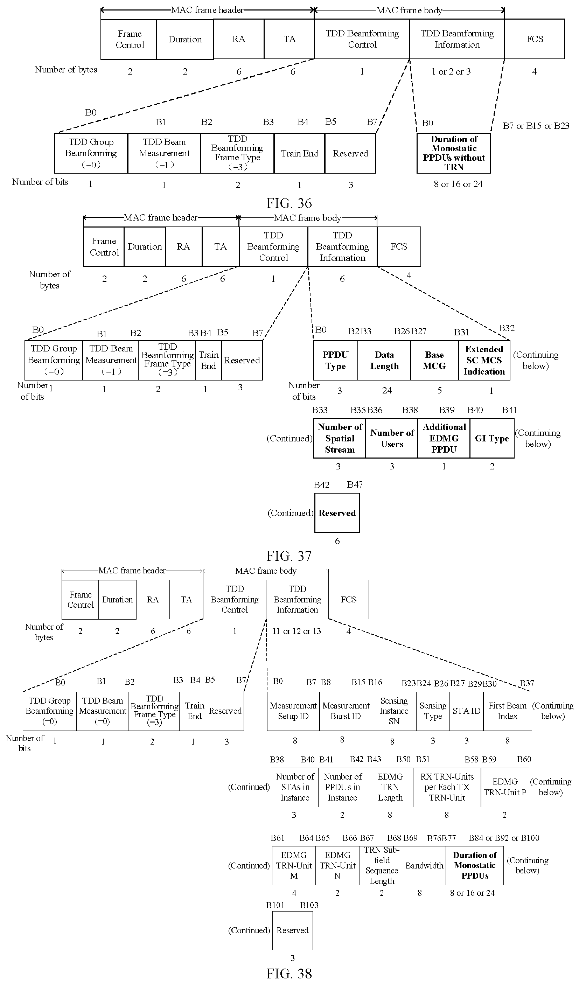

In the case that the second field is the Duration of Monostatic PPDUs without TRN field in the TDD Beamforming field, as shown in FIG. 36, a structure of a DMG sensing response frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies one or two or three bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 1. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes the Duration of Monostatic PPDUs without TRN sub-field. The Duration of Monostatic PPDUs without TRN sub-field occupies B0 to B7, B0 to B15, or B0 to B23, that is, eight bytes, 16 bytes, or 24 bytes.

The Duration of Monostatic PPDUs without TRN sub-field is added in the TDD Beamforming Information field, and the sub-field is reserved in the case that the sensing measurement is not the coordinated monostatic sensing. The sub-field indicates a duration of the monostatic PPDU (the duration of the TRN field is removed, which is fixed) to be transmitted by the sensing responder in the sensing measurement instance of the frame with a unit of TSF time unit.

### 2.1.5 Fifth embodiments

In the case that the second field is the Data Length field in the TDD Beamforming field, as shown in FIG. 37, a structure of a DMG sensing response frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies six bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 1. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

Several sub-fields are added in the TDD Beamforming Information field, and include at least one of the PPDU Type sub-field, the Data Length sub-field, the Base MCG sub-field, the Extended SC MCS Indication sub-field, the Number of Spatial Streams sub-field, the Number of Users sub-field, the Additional EDMG PPDU sub-field, the GI Type sub-field, or the Reserved sub-field. The PPDU Type sub-field occupies B0 to B2, that is, three bytes. The Data Length sub-field occupies B3 to B26, that is, 24 bytes. The Base MCG sub-field occupies B27 to B31, that is, five bytes. The Extended SC MCS Indication sub-field occupies B33 to B35, that is, three bytes. The Number of Spatial Streams sub-field occupies B33 to B35, that is, three bytes. The Number of Users sub-field occupies B36 to B38, that is, three bytes. The Additional EDMG PPDU sub-field occupies B39, that is, one byte. The GI Type sub-field occupies B40 to B42, that is, two bytes. The Reserved sub-field occupies B42 to B47, that is, six bytes.

The sub-fields are reserved in the case that the sensing measurement is not the coordinated monostatic sensing.

In the embodiments, the second field is carried in the TDD Beamforming field, and is the Duration of Monostatic PPDUs field, the Duration of Monostatic PPDUs without TRN field, or the Data Length field in the TDD Beamforming field. The duration information of the monostatic PPDU is transmitted in each sensing measurement instance once, and thus monostatic PPDUs used in different sensing measurement instances have different durations, such that the flexibility is great.

### 2.1 The second solution

In the embodiments of the second solution, the embodiments of the sensing measurement setup phase are the same as the embodiments of the sensing measurement setup phase in the first solution, which are not described again herein.

In the sensing measurement setup phase, the second field is carried in the TDD Beamforming field, and is the Duration of Monostatic PPDUs field, the Duration of Monostatic PPDUs without TRN field, or the Data Length field in the TDD Beamforming field.

### 2.2.1 First embodiments

In the case that the second field is the Duration of Monostatic PPDUs field in the TDD Beamforming field, as shown in FIG. 38, a structure of a DMG sensing request frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies 11, 12, or 13 bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 0. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes the Measurement Setup ID sub-field, the Measurement Burst ID sub-field, the Sensing Instance SN sub-field, the Sensing Type sub-field, the STA ID sub-field, the First Beam Index sub-field, the Number of STAs in Instance sub-field, the Number of PPDUs in Instance sub-field, the EDMG TRN Length sub-field, the RX TRN-Units per Each TX TRN-Unit sub-field, the EDMG TRN-Unit P sub-field, the EDMG TRN-Unit M sub-field, the EDMG TRN-Unit N sub-field, the TRN Sub-field Sequence Length sub-field, the Bandwidth sub-field, the Duration of Monostatic PPDUs sub-field, and the Reserved sub-field that are arranged in sequence. The Measurement Setup ID sub-field occupies B0 to B7, that is, eight bytes. The Measurement Burst ID sub-field occupies B8 to B15, that is, eight bytes. The Measurement Instance Sequence sub-field occupies B16 to B23, that is, eight bytes. The Sensing Type sub-field occupies B24 to B26, that is, three bytes. The STA ID sub-field occupies B27 to B29, that is, three bytes. The First Beam Index sub-field occupies B30 to B37, that is, eight bytes. The Number of STAs in Instance sub-field occupies B38 to B40, that is, three bytes. The Number of PPDUs in Instance sub-field occupies B41 to B42, that is, two bytes. The EDMG TRN Length sub-field occupies B43 to B50, that is, eight bytes. The RX TRN-Units per Each TX TRN-Unit sub-field occupies B51 to B58, that is, eight bytes. The EDMG TRN-Unit P sub-field occupies B59 to B60, that is, two bytes. The EDMG TRN-Unit M sub-field occupies B61 to B64, that is, four bytes. The EDMG TRN-Unit N sub-field occupies B65 to B66, that is, two bytes. The TRN Sub-field Sequence Length sub-field occupies B67 to B68, that is, two bytes. The Bandwidth sub-field occupies B69 to B76, that is, eight bytes. The Duration of Monostatic PPDUs sub-field occupies B77 to B84, B77 to B92, or B77 to B100 that is, eight bytes, 16 bytes, or 24 bytes. The Reserved sub-field occupies B101 to B103, that is, three bytes.

The Duration of Monostatic PPDUs sub-field is added in the TDD Beamforming Information field, and the sub-field is reserved in the case that the sensing measurement is not the coordinated monostatic sensing. The sub-field indicates the duration of the monostatic PPDU to be transmitted by the sensing responder in the sensing measurement instance of the frame with a unit of TSF time unit.

### 2.2.2 Second embodiments

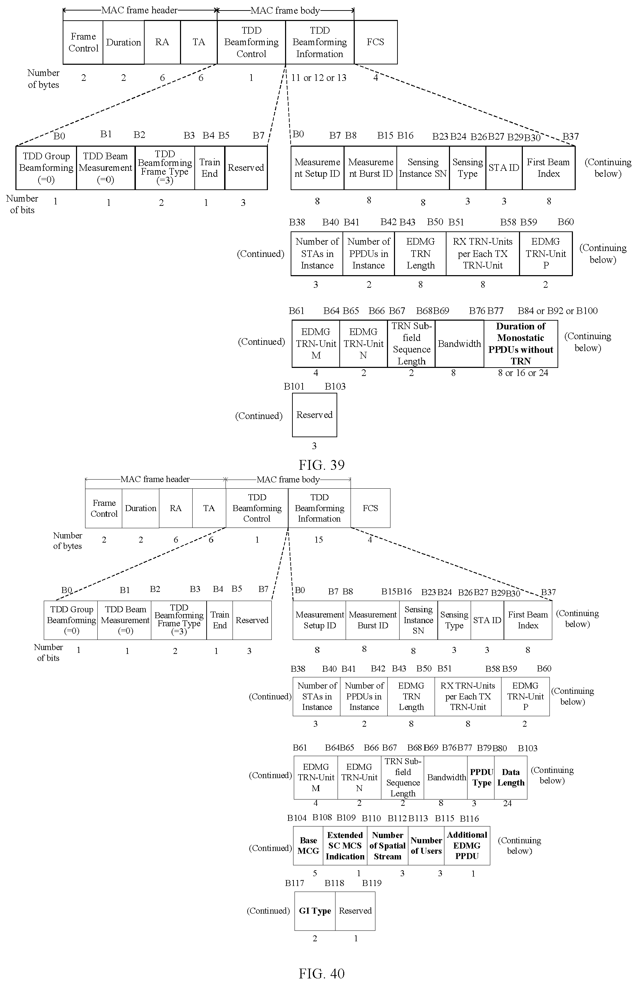

In the case that the second field is the Duration of Monostatic PPDUs without TRN field in the TDD Beamforming field, as shown in FIG. 39, a structure of a DMG sensing request frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies 11, 12, or 13 bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 0. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes the Measurement Setup ID sub-field, the Measurement Burst ID sub-field, the Sensing Instance SN sub-field, the Sensing Type sub-field, the STA ID sub-field, the First Beam Index sub-field, the Number of STAs in Instance sub-field, the Number of PPDUs in Instance sub-field, the EDMG TRN Length sub-field, the RX TRN-Units per Each TX TRN-Unit sub-field, the EDMG TRN-Unit P sub-field, the EDMG TRN-Unit M sub-field, the EDMG TRN-Unit N sub-field, the TRN Sub-field Sequence Length sub-field, the Bandwidth sub-field, the Duration of Monostatic PPDUs sub-field, and the Reserved sub-field that are arranged in sequence. The Measurement Setup ID sub-field occupies B0 to B7, that is, eight bytes. The Measurement Burst ID sub-field occupies B8 to B15, that is, eight bytes. The Measurement Instance Sequence sub-field occupies B16 to B23, that is, eight bytes. The Sensing Type sub-field occupies B24 to B26, that is, three bytes. The STA ID sub-field occupies B27 to B29, that is, three bytes. The First Beam Index sub-field occupies B30 to B37, that is, eight bytes. The Number of STAs in Instance sub-field occupies B38 to B40, that is, three bytes. The Number of PPDUs in Instance sub-field occupies B41 to B42, that is, two bytes. The EDMG TRN Length sub-field occupies B43 to B50, that is, eight bytes. The RX TRN-Units per Each TX TRN-Unit sub-field occupies B51 to B58, that is, eight bytes. The EDMG TRN-Unit P sub-field occupies B59 to B60, that is, two bytes. The EDMG TRN-Unit M sub-field occupies B61 to B64, that is, four bytes. The EDMG TRN-Unit N sub-field occupies B65 to B66, that is, two bytes. The TRN Sub-field Sequence Length sub-field occupies B67 to B68, that is, two bytes. The Bandwidth sub-field occupies B69 to B76, that is, eight bytes. The Duration of Monostatic PPDUs without TRN sub-field occupies B77 to B84, B77 to B92, or B77 to B100 that is, eight bytes, 16 bytes, or 24 bytes. The Reserved sub-field occupies B101 to B103, that is, three bytes.

The Duration of Monostatic PPDUs without TRN sub-field is added in the TDD Beamforming Information field, and the sub-field is reserved in the case that the sensing measurement is not the coordinated monostatic sensing. The sub-field indicates the duration of the monostatic PPDU (the duration of the TRN field is removed) to be transmitted by the sensing responder in the sensing measurement instance of the frame with a unit of TSF time unit.

### 2.2.3 Third embodiments

In the case that the second field is the Data Length field in the TDD Beamforming field, as shown in FIG. 40, a structure of a DMG sensing request frame according to some embodiments of the present disclosure includes the MAC frame header, the MAC frame body, and the Frame Check field. The MAC frame header includes the Frame Control field, the Duration field, the RA field, and the TA field that are arranged in sequence. The MAC frame body includes the TDD Beamforming Control field and the TDD Beamforming Information field that are arranged in sequence. The Frame Control field occupies two bytes, the Duration field occupies two bytes, the RA field occupies six bytes, the TA field occupies six bytes, the TDD Beamforming Control field occupies one byte, the TDD Beamforming Information field occupies 11, 12, or 13 bytes, and the Frame Check field occupies four bytes.

In some embodiments, the TDD Beamforming Control field includes the TDD Group Beamforming sub-field, the TDD Beam Measurement sub-field, the TDD Beamforming Frame Type sub-field, the Train End sub-field, and the Reserved sub-field that are arranged in sequence. The TDD Group Beamforming sub-field occupies B0, that is, one byte, with a value of 0. The TDD Beam Measurement sub-field occupies B1, that is, one byte, with a value of 0. The TDD Beamforming Frame Type sub-field occupies B2 to B3, that is, two bytes, with a value of 3. The Train End sub-field occupies B4, that is, one byte. The Reserved sub-field occupies B5 to B7, that is, three bytes.

In some embodiments, the TDD Beamforming Information field includes the Measurement Setup ID sub-field, the Measurement Burst ID sub-field, the Sensing Instance SN sub-field, the Sensing Type sub-field, the STA ID sub-field, the First Beam Index sub-field, the Number of STAs in Instance sub-field, the Number of PPDUs in Instance sub-field, the EDMG TRN Length sub-field, the RX TRN-Units per Each TX TRN-Unit sub-field, the EDMG TRN-Unit P sub-field, the EDMG TRN-Unit M sub-field, the EDMG TRN-Unit N sub-field, the TRN Sub-field Sequence Length sub-field, the Bandwidth sub-field, the Duration of Monostatic PPDUs sub-field, and the Reserved sub-field that are arranged in sequence. The Measurement Setup ID sub-field occupies B0 to B7, that is, eight bytes. The Measurement Burst ID sub-field occupies B8 to B15, that is, eight bytes. The Measurement Instance Sequence sub-field occupies B16 to B23, that is, eight bytes. The Sensing Type sub-field occupies B24 to B26, that is, three bytes. The STA ID sub-field occupies B27 to B29, that is, three bytes. The First Beam Index sub-field occupies B30 to B37, that is, eight bytes. The Number of STAs in Instance sub-field occupies B38 to B40, that is, three bytes. The Number of PPDUs in Instance sub-field occupies B41 to B42, that is, two bytes. The EDMG TRN Length sub-field occupies B43 to B50, that is, eight bytes. The RX TRN-Units per Each TX TRN-Unit sub-field occupies B51 to B58, that is, eight bytes. The EDMG TRN-Unit P sub-field occupies B59 to B60, that is, two bytes. The EDMG TRN-Unit M sub-field occupies B61 to B64, that is, four bytes. The EDMG TRN-Unit N sub-field occupies B65 to B66, that is, two bytes. The TRN Sub-field Sequence Length sub-field occupies B67 to B68, that is, two bytes. The Bandwidth sub-field occupies B69 to B76, that is, eight bytes. The PPDU Type sub-field occupies B77 to B79, that is, three bytes. The Data Length sub-field occupies B80 to B103, that is, 24 bytes. The Base MCG sub-field occupies B104 to B108, that is, five bytes. The Extended SC MCS Indication sub-field occupies B109, that is, one byte. The Number of Spatial Streams sub-field occupies B110 to B112, that is, three bytes. The Number of Users sub-field occupies B113 to B115, that is, three bytes. The Additional EDMG PPDU sub-field occupies B116, that is, one byte. The GI Type sub-field occupies B117 to B118, that is, two bytes. The Reserved sub-field occupies B119, that is, one byte.

Several sub-fields are added in the TDD Beamforming field, and include at least one of the PPDU Type sub-field, the Data Length sub-field, the Base MCG sub-field, the Extended SC MCS Indication sub-field, the Number of Spatial Streams sub-field, the Number of Users sub-field, the Additional EDMG PPDU sub-field, the GI Type sub-field, or the Reserved sub-field.

In summary, in the method for sensing measurement according to the embodiments, the duration information of the monostatic PPDU is set or negotiated between sensing participants by transmitting or receiving the frame carrying the second field in the parallel coordinated monostatic sensing process, such that the monostatic sensing measurement frame is prevented from being overlapped with the DMG sensing measurement report frame, the response sensing procedure operates normally, and the accuracy of the sensing measurement result is ensured.

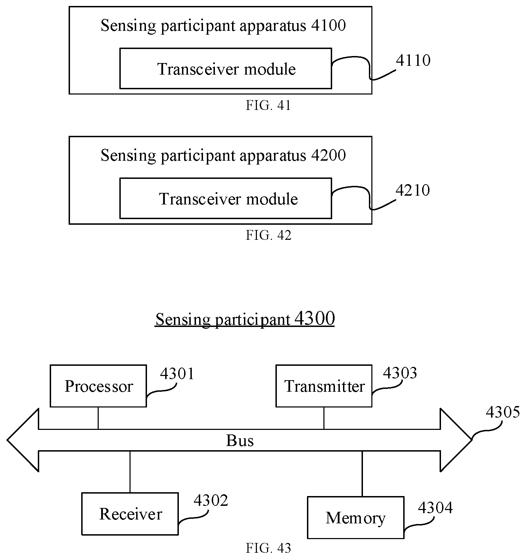

FIG. 41 is a block diagram of a sensing participant apparatus 4100 according to some embodiments of the present disclosure. The sensing participant apparatus 4100 is at least one of a sensing responder, a sensing initiator, a sensing transmitter, or a sensing receiver. The sensing participant apparatus 4100 includes: a transceiver module 4110, configured to transmit or receive a frame carrying a first field in a sensing measurement process, wherein the first field indicates information related to coordinate system setting.

In some embodiments, the first field is a Coordinates field for indicating a type of a reference coordinate system.

In some embodiments, the type of the reference coordinate system is at least one of an Earth coordinate system or an STA coordinate system.

In some embodiments, the Coordinates field is carried in a DMG Sensing Beam Descriptor element.

The DMG Sensing Beam Descriptor element further includes N Beam Descriptor fields, wherein sub-fields in each of the N Beam Descriptor fields include a Beam Azimuth field and a Beam Elevation field, N being a positive integer; and the Coordinates field and the N Beam Descriptor fields are in a same level, and the Coordinates field indicates the reference coordinate system of all Beam Azimuth fields and Beam Elevation fields in the DMG Sensing Beam Descriptor element; or
the DMG Sensing Beam Descriptor element further includes N Beam Descriptor fields, wherein sub-fields in each of the N Beam Descriptor fields include a Beam Azimuth field, a Beam Elevation field, and the Coordinates field, N being a positive integer; and Coordinates fields are in one-to-one correspondence to the N Beam Descriptor fields, and each of the Coordinates fields indicates the reference coordinate system of the Beam Azimuth field and the Beam Elevation field in the Beam Descriptor field including the each of the Coordinates fields.

In some embodiments, the DMG Sensing Beam Descriptor element is carried in a Frame Body field of at least one of a DMG beacon frame, an association request frame, an association response frame, a reassociation request frame, a reassociation response frame, a probe request frame, a probe response frame, or an announce frame.

In some embodiments, the Coordinates field is carried in a DMG Beacon Sector Descriptor element.

The DMG Beacon Sector Descriptor element further includes N Sector Descriptor fields, wherein sub-fields in each of the N Sector Descriptor fields include a Sector Azimuth field and a Sector Elevation field, N being a positive integer; and the Coordinates field and the N Sector Descriptor fields are in a same level, and the Coordinates field indicates the reference coordinate system of all Sector Azimuth fields and Sector Elevation fields in the DMG Beacon Sector Descriptor element; or
the DMG Beacon Sector Descriptor element further includes N Sector Descriptor fields, wherein sub-fields in each of the N Sector Descriptor fields include a Sector Azimuth field, a Sector Elevation field, and the Coordinates field, N being a positive integer; and Coordinates fields are in one-to-one correspondence to the N Sector Descriptor fields, and each of the Coordinates fields indicates the reference coordinate system of the Sector Azimuth field and the Sector Elevation field in the Sector Descriptor field including the each of the Coordinates fields.

In some embodiments, the DMG Beacon Sector Descriptor element is carried in a Frame Body field of an information response frame.

In some embodiments, the Coordinates field is carried in a DMG Passive Sensing Beacon Information element.

The DMG Passive Sensing Beacon Information element further includes a Beacon Information Control field, wherein the Coordinates field and the Beacon Information Control field are in a same level, and the Coordinates field indicates the reference coordinate system of a Sector Azimuth field and a Sector Elevation field in a DMG Beacon Sector Descriptor element in a frame of the Coordinates field; or
the DMG Passive Sensing Beacon Information element further includes a Beacon Information Control field, wherein a sub-field in the Beacon Information Control field includes the Coordinates field, and the Coordinates field indicates the reference coordinate system of a Sector Azimuth field and a Sector Elevation field in a DMG Beacon Sector Descriptor element in a frame of the Coordinates field.

In some embodiments, the DMG Passive Sensing Beacon Information element is carried in a Frame Body field of at least one of an information request frame or an information response frame.

In some embodiments, the Coordinates field is carried in a DMG Sensing Short Capability element.

The Coordinates field is an Earth Coordinate sub-field in the DMG Sensing Short Capability element, wherein in a case that values of the Earth Coordinate sub-field are a first value, the values of the Earth Coordinate sub-field indicate that an STA only transmits an azimuth and an elevation in an Earth coordinate system.

In some embodiments, the DMG Sensing Short Capability element is carried in a Frame Body field of at least one of a DMG beacon frame, an association request frame, an association response frame, a reassociation request frame, a reassociation response frame, a probe request frame, a probe response frame, an information response frame, or an announce frame.

In some embodiments, transmitting or receiving the frame carrying the first field in the sensing measurement process includes: transmitting or receiving a frame carrying the Coordinates field in a sensing session setup phase; and transmitting or receiving a frame carrying the Coordinates field in a sensing measurement setup phase.

In some embodiments, the Coordinates field is carried in a DMG Sensing Measurement Setup element, and the Coordinates field indicates the reference coordinate system of an Azimuth field and an Elevation field in the DMG Sensing Measurement Setup element.

In some embodiments, the DMG Sensing Measurement Setup element includes a Measurement Setup Control field and a Peer Orientation field.

In some embodiments, the Coordinates field is a sub-field of the Measurement Setup Control field, and the Azimuth field and the Elevation field are sub-fields of the Peer Orientation field; or the Coordinates field, the Azimuth field, and the Elevation field are all sub-fields of the Peer Orientation field.

In some embodiments, in a case that values of an Earth Coordinates field in the DMG Sensing Short Capability element are a first value, values of the Coordinates field are unique and are for indicating that the reference coordinate system of the Azimuth field and the Elevation field is an STA coordinate system;
in a case that values of an Earth Coordinates field in the DMG Sensing Short Capability element are a second value, and values of the Coordinates field are a first value, the Coordinates field indicates that the reference coordinate system of the Azimuth field and the Elevation field is an STA coordinate system; or
in a case that values of an Earth Coordinates field in the DMG Sensing Short Capability element are the second value, and values of the Coordinates field are the second value, the Coordinates field indicates that the reference coordinate system of the Azimuth field and the Elevation field is an Earth coordinate system.

In some embodiments, the DMG Sensing Measurement Setup element is carried in a Frame Body field of at least one of a sensing measurement setup request frame, a sensing measurement setup response frame, a DMG sensing measurement setup request frame, or a DMG sensing measurement setup response frame.

FIG. 42 is a block diagram of a sensing participant apparatus according to some embodiments of the present disclosure. The sensing participant apparatus 4200 is at least one of a sensing responder, a sensing initiator, a sensing transmitter, or a sensing receiver. The sensing participant apparatus 4100 includes:
a transceiver module 4210, configured to transmit or receive a frame carrying a second field in a parallel coordinated monostatic sensing process, wherein the second field indicates duration information of a monostatic PPDU.

In some embodiments, the sensing participant apparatus includes a sensing responder, configured to transmit the frame carrying the second field to a sensing initiator in the parallel coordinated monostatic sensing process.

In some embodiments, the sensing participant apparatus includes a sensing initiator, configured to receive the frame carrying the second field from a sensing responder in the parallel coordinated monostatic sensing process.

In some embodiments, the sensing participant apparatus includes a sensing initiator, configured to transmit the frame carrying the second field to a sensing responder in the parallel coordinated monostatic sensing process.

In some embodiments, the sensing participant apparatus includes a sensing responder, and configured to receive the frame carrying the second field from a sensing initiator in the parallel coordinated monostatic sensing process.

In some embodiments, the second field is carried in a Coordinated Monostatic Specific Configuration Optional sub-element of the DMG Sensing Measurement Setup element.

In some embodiments, the second field is a Duration of Monostatic PPDUs without TRN field in the Coordinated Monostatic Specific Configuration Optional sub-element, and the Coordinated Monostatic Specific Configuration Optional sub-element further includes at least one of a Sub-element identification field or a Length field.

In some embodiments, the Coordinated Monostatic Specific Configuration Optional sub-element further includes at least one of a Sub-element identification field, a Length field, a PPDU Type field, a Data Length field, an MCS field, an Additional EDMG PPDU field, a Number of Spatial Streams field, a Number of Users field, or a GI Type field.

In some embodiments, in a case that the sensing participant is a sensing initiator, the frame is a DMG sensing measurement setup response frame; and in a case that the sensing participant is a sensing responder, the frame is a DMG sensing measurement setup request frame.

In some embodiments, the sensing participant apparatus includes a sensing initiator, and in a case that a coordinated monostatic sensing instance is in a parallel mode, the sensing initiator transmits a first DMG poll frame to trigger the sensing responder to report a sensing measurement result within an SIFS upon transmission of the monostatic PPDU with a longest duration.

In some embodiments, the second field is carried in a TDD Beamforming Information field.

In some embodiments, the second field is a Duration of Monostatic PPDUS field in the TDD Beamforming Information field or a Duration of Monostatic PPDUs without TRN field in the TDD Beamforming Information field.

In some embodiments, the second field is a Data Length field in the TDD Beamforming Information field, and a Coordinated Monostatic Specific Configuration Optional sub-element includes at least one of a Sub-element identification field, a Length field, a PPDU Type field, a Data Length field, an MCS field, an Additional EDMG PPDU field, a Number of Spatial Streams field, a Number of Users field, a GI Type field, or a Reserved field.

In some embodiments, in a case that the sensing participant apparatus is a sensing responder, the frame is a DMG sensing response frame; and in a case that the sensing participant is a sensing initiator, the frame is a DMG sensing request frame.

In some embodiments, the sensing participant apparatus includes a sensing responder, and in a case that a coordinated monostatic sensing instance is in a parallel mode, the sensing responder transmits, based on the duration information configurated by the sensing initiator, the monostatic PPDU that meets a requirement.

It should be noted that, in the case that the apparatus according to the above embodiments implements the functions thereof, the division of the functional modules is merely exemplary. In practical application, the above functions may be assigned to different functional modules according to actual needs. That is, the internal structure of the device may be divided into different functional modules, so as to implement all or a part of the above functions.

With regard to the apparatus in the above embodiments, the specific manner in which each module performs the operation has been described in detail in the embodiments related to the method and will not be described in detail herein.

FIG. 43 is a schematic structural diagram of a sensing participant according to some embodiments of the present disclosure. The sensing participant apparatus 4300 is at least one of an AP, an STA, a sensing transmitter, a sensing receiver, a sensing initiator, or a sensing responder. The sensing participant apparatus 4300 includes: a processor 4301, a receiver 4302, a transmitter 4303, a memory 4304, and a bus 4305.

The processor 4301 includes one or more processing cores, and achieves various functional applications and information processing by running software programs and modules.

The receiver 4302 and the transmitter 4303 are practiced as a communication assembly. The communication assembly is a communication chip.

The memory 4304 is connected to the processor 4301 over the bus 4305. The memory 4304 is configured to store one or more instructions, and the processor 4301, when loading and executing the one or more instructions, is caused to perform various processes in the above method embodiments.

In addition, the memory 4304 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

Some embodiments of the present disclosure further provide a computer-readable storage medium storing one or more computer programs, wherein the one or more computer programs, when loaded and run by a sensing participant, cause the sensing participant (a sensing initiator and/or a sensing responder) to perform the method for coordinated sensing measurement in the above method embodiments.

In some embodiments, the computer-readable storage medium is a ROM, a Random-Access Memory (RAM), a solid state drive (SSD), or a compact disc. The RAM is a resistance random access memory (ReRAM) or a dynamic random access memory (DRAM).

Some embodiments of the present disclosure further provide a chip. The chip includes programmable logic circuity and/or program instructions, wherein a sensing measurement device equipped with the chip, when running, is caused to perform the above method for sensing measurement of the sensing measurement device.

Some embodiments of the present disclosure further provide a computer program product or computer program. The computer program product or the computer program includes one or more computer instructions stored in a computer-readable storage medium, wherein a sensing measurement device, when reading the one or more computer instructions from the computer-readable storage medium and executing the one or more computer instructions, is caused to perform the above method for sensing measurement of the sensing measurement device.

It should be understood by those skilled in the art that in the above one or more embodiments, functions described in the embodiments of the present disclosure are practiced by the hardware, the software, the firmware or any combinations thereof. In the case that the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for sensing measurement, applicable to a sensing participant, the method comprising:
transmitting or receiving a frame carrying a first field in a sensing measurement process, wherein the first field indicates information related to coordinate system setting.

2. The method according to claim 1, wherein the first field is a Coordinates field for indicating a type of a reference coordinate system.

3. The method according to claim 2, wherein the type of the reference coordinate system is at least one of an Earth coordinate system or a station (STA) coordinate system.

4. The method according to claim 2, wherein the Coordinates field is carried in a Directional Multi-Gigabit (DMG) Sensing Beam Descriptor element.

5. The method according to claim 4, wherein
the DMG Sensing Beam Descriptor element further comprises N Beam Descriptor fields, wherein sub-fields in each of the N Beam Descriptor fields comprise a Beam Azimuth field and a Beam Elevation field, N being a positive integer; and
the Coordinates field and the N Beam Descriptor fields are in a same level, and the Coordinates field indicates the reference coordinate system of all Beam Azimuth fields and Beam Elevation fields in the DMG Sensing Beam Descriptor element.

6. The method according to claim 4, wherein
the DMG Sensing Beam Descriptor element further comprises N Beam Descriptor fields, wherein sub-fields in each of the N Beam Descriptor fields comprise a Beam Azimuth field, a Beam Elevation field, and the Coordinates field, N being a positive integer; and
Coordinates fields are in one-to-one correspondence to the N Beam Descriptor fields, and each of the Coordinates fields indicates the reference coordinate system of the Beam Azimuth field and the Beam Elevation field in the Beam Descriptor field including the each of the Coordinates fields.

7. The method according to any one of claims 4 to 6, wherein the DMG Sensing Beam Descriptor element is carried in a Frame Body field of at least one of a DMG beacon frame, an association request frame, an association response frame, a reassociation request frame, a reassociation response frame, a probe request frame, a probe response frame, or an announce frame.

8. The method according to claim 2, wherein the Coordinates field is carried in a DMG Beacon Sector Descriptor element.

9. The method according to claim 7, wherein
the DMG Beacon Sector Descriptor element further comprises N Sector Descriptor fields, wherein sub-fields in each of the N Sector Descriptor fields comprise a Sector Azimuth field and a Sector Elevation field, N being a positive integer; and
the Coordinates field and the N Sector Descriptor fields are in a same level, and the Coordinates field indicates the reference coordinate system of all Sector Azimuth fields and Sector Elevation fields in the DMG Beacon Sector Descriptor element.

10. The method according to claim 7, wherein
the DMG Beacon Sector Descriptor element further comprises N Sector Descriptor fields, wherein sub-fields in each of the N Sector Descriptor fields comprise a Sector Azimuth field, a Sector Elevation field, and the Coordinates field, N being a positive integer; and
Coordinates fields are in one-to-one correspondence to the N Sector Descriptor fields, and each of the Coordinates fields indicates the reference coordinate system of the Sector Azimuth field and the Sector Elevation field in the Sector Descriptor field including the each of the Coordinates fields.

11. The method according to any one of claims 8 to 10, wherein the DMG Beacon Sector Descriptor element is carried in a Frame Body field of an information response frame.

12. The method according to claim 2, wherein the Coordinates field is carried in a DMG Passive Sensing Beacon Information element.

13. The method according to claim 12, wherein the DMG Passive Sensing Beacon Information element further comprises a Beacon Information Control field, wherein the Coordinates field and the Beacon Information Control field are in a same level, and the Coordinates field indicates the reference coordinate system of a Sector Azimuth field and a Sector Elevation field in a DMG Beacon Sector Descriptor element in a frame of the Coordinates field.

14. The method according to claim 12, wherein the DMG Passive Sensing Beacon Information element further comprises a Beacon Information Control field, wherein a sub-field in the Beacon Information Control field comprises the Coordinates field, and the Coordinates field indicates the reference coordinate system of a Sector Azimuth field and a Sector Elevation field in a DMG Beacon Sector Descriptor element in a frame of the Coordinates field.

15. The method according to any one of claims 12 to 14, wherein the DMG Passive Sensing Beacon Information element is carried in a Frame Body field of at least one of an information request frame or an information response frame.

16. The method according to claim 2, wherein the Coordinates field is carried in a DMG Sensing Short Capability element.

17. The method according to claim 16, wherein the Coordinates field is an Earth Coordinate sub-field in the DMG Sensing Short Capability element, wherein values of the Earth Coordinate sub-field are for indicating, in a case that the values of the Earth Coordinate sub-field are a first value, that a station (STA) only transmits an azimuth and an elevation in an Earth coordinate system.

18. The method according to claim 16 or 17, wherein the DMG Sensing Short Capability element is carried in a Frame Body field of at least one of a DMG beacon frame, an association request frame, an association response frame, a reassociation request frame, a reassociation response frame, a probe request frame, a probe response frame, an information response frame, or an announce frame.

19. The method according to any one of claims 3 to 18, wherein transmitting or receiving the frame carrying the first field in the sensing measurement process comprises:
transmitting or receiving a frame carrying the Coordinates field in a sensing session setup phase.

20. The method according to claim 2, wherein the Coordinates field is carried in a DMG Sensing Measurement Setup element, and the Coordinates field indicates the reference coordinate system of an Azimuth field and an Elevation field in the DMG Sensing Measurement Setup element.

21. The method according to claim 20, wherein the DMG Sensing Measurement Setup element comprises a Measurement Setup Control field and a Peer Orientation field, wherein
the Coordinates field is a sub-field of the Measurement Setup Control field, and the Azimuth field and the Elevation field are sub-fields of the Peer Orientation field; or
the Coordinates field, the Azimuth field and the Elevation field are all sub-fields of the Peer Orientation field.

22. The method according to claim 20, wherein in a case that values of an Earth Coordinates field in the DMG Sensing Short Capability element are a first value, values of the Coordinates field are unique and are for indicating that the reference coordinate system of the Azimuth field and the Elevation field is a station (STA) coordinate system.

23. The method according to claim 20, wherein
in a case that values of an Earth Coordinates field in the DMG Sensing Short Capability element are a second value, and values of the Coordinates field are a first value, the Coordinates field indicates that the reference coordinate system of the Azimuth field and the Elevation field is a station (STA) coordinate system; or
in a case that values of an Earth Coordinates field in the DMG Sensing Short Capability element are a second value, and values of the Coordinates field are the second value, the Coordinates field indicates that the reference coordinate system of the Azimuth field and the Elevation field is an Earth coordinate system.

24. The method according to claim 1, wherein the first field is at least one of an Azimuth field or an Elevation field in a DMG Sensing Measurement Setup element, and indicates that a reference coordinate system is a coordinate system related to orientation of a station (STA) transmitting the frame.

25. The method according to any one of claims 20 to 24, wherein the DMG Sensing Measurement Setup element is carried in a Frame Body field of at least one of a sensing measurement setup request frame, a sensing measurement setup response frame, a DMG sensing measurement setup request frame, or a DMG sensing measurement setup response frame.

26. The method according to any one of claims 20 to 24, wherein transmitting or receiving the frame carrying the first field in the sensing measurement process comprises:
transmitting or receiving a frame carrying the Coordinates field in a sensing measurement setup phase.

27. A method for sensing measurement, applicable to a sensing participant, the method comprising:
transmitting or receiving a frame carrying a second field in a parallel coordinated monostatic sensing process, wherein the second field indicates duration information of a monostatic physical layer protocol data unit (PPDU).

28. The method according to claim 27, wherein the sensing participant includes a sensing responder, and transmitting the frame carrying the second field in the parallel coordinated monostatic sensing process comprises:
transmitting the frame carrying the second field to a sensing initiator in the parallel coordinated monostatic sensing process.

29. The method according to claim 27, wherein the sensing participant includes a sensing initiator, and receiving the frame carrying the second field in the parallel coordinated monostatic sensing process comprises:
receiving the frame carrying the second field from a sensing responder in the parallel coordinated monostatic sensing process.

30. The method according to claim 27, wherein the sensing participant includes a sensing initiator, and transmitting the frame carrying the second field in the parallel coordinated monostatic sensing process comprises:
transmitting the frame carrying the second field to a sensing responder in the parallel coordinated monostatic sensing process.

31. The method according to claim 27, wherein the sensing participant includes a sensing responder, and receiving the frame carrying the second field in the parallel coordinated monostatic sensing process comprises:
receiving the frame carrying the second field from a sensing initiator in the parallel coordinated monostatic sensing process.

32. The method according to any one of claims 28 to 31, wherein the second field is carried in a Directional Multi-Gigabit (DMG) Sensing Measurement Setup element.

33. The method according to claim 32, wherein the second field is carried in a Coordinated Monostatic Specific Configuration Optional sub-element of the DMG Sensing Measurement Setup element.

34. The method according to claim 33, wherein the second field is a Duration of Monostatic PPDUs without Token Ring Network (TRN) field in the Coordinated Monostatic Specific Configuration Optional sub-element or a Duration of Monostatic PPDUs field in the Coordinated Monostatic Specific Configuration Optional sub-element.

35. The method according to claim 34, wherein the Coordinated Monostatic Specific Configuration Optional sub-element further comprises at least one of a Sub-element identification field or a Length field.

36. The method according to claim 33, wherein the second field is a Data Length field in the Coordinated Monostatic Specific Configuration Optional sub-element.

37. The method according to claim 36, wherein the Coordinated Monostatic Specific Configuration Optional sub-element further comprises at least one of a Sub-element identification field, a Length field, a PPDU Type field, a Data Length field, a Modulation and Coding Scheme (MCS) field, an Additional Enhanced DMG (EDMG) PPDU field, a Number of Spatial Streams field, a Number of Users field, or a Guard Interval (GI) Type field.

38. The method according to claim 32, wherein in a case that the sensing participant is a sensing initiator, the frame is a DMG sensing measurement setup response frame; and in a case that the sensing participant is a sensing responder, the frame is a DMG sensing measurement setup request frame.

39. The method according to any one of claims 28 to 31, wherein the sensing participant comprises a sensing initiator, and the method further comprises:
in a case that a coordinated monostatic sensing instance is in a parallel mode, the sensing initiator transmitting a first directional multi-gigabit (DMG) poll frame to trigger the sensing responder to report a sensing measurement result within a short interframe space (SIFS) after transmission of the monostatic PPDU with a longest duration.

40. The method according to any one of claims 28 to 31, wherein the second field is carried in a Time-Division Duplexing (TDD) Beamforming Information field.

41. The method according to claim 40, wherein the second field is a Duration of Monostatic PPDUS field in the TDD Beamforming Information field or a Duration of Monostatic PPDUs without Token Ring Network (TRN) field in the TDD Beamforming Information field.

42. The method according to claim 40, wherein the second field is a Data Length field in the TDD Beamforming Information field.

43. The method according to claim 42, wherein a Coordinated Monostatic Specific Configuration Optional sub-element comprises at least one of a Sub-element identification field, a Length field, a PPDU Type field, a Data Length field, a Modulation and Coding Scheme (MCS) field, an Additional Enhanced DMG (EDMG) PPDU field, a Number of Spatial Streams field, a Number of Users field, a Guard Interval (GI) Type field, or a Reserved field.

44. The method according to claim 40, wherein in a case that the sensing participant is a sensing responder, the frame is a DMG sensing response frame; and in a case that the sensing participant is a sensing initiator, the frame is a DMG sensing request frame.

45. The method according to claim 30 or 31, wherein the sensing participant comprises a sensing responder, and the method further comprises:
in a case that a coordinated monostatic sensing instance is in a parallel mode, transmitting, by the sensing responder based on the duration information configurated by the sensing initiator, the monostatic PPDU that meets a requirement.

46. An apparatus for sensing measurement, comprising:
a transceiver module, configured to transmit or receive a frame carrying a first field in a sensing measurement process, wherein the first field indicates information related to coordinate system setting.

47. An apparatus for sensing measurement, comprising:
a transceiver module, configured to transmit or receive a frame carrying a second field in a parallel coordinated monostatic sensing process, wherein the second field indicates duration information of a monostatic physical layer protocol data unit (PPDU).

48. A sensing participant, comprising: a processor, a transceiver connected to the processor, and a memory storing one or more runnable programs, wherein the processor, when loading and running the one or more runnable programs, causes the sensing participant to perform the method for sensing measurement as defined in any one of claims 1 to 45.

49. A computer-readable storage medium, storing one or more runnable programs, wherein the one or more runnable programs, when loaded and run by a device for sensing measurement, cause the device for sensing measurement to perform the method for sensing measurement as defined in any one of claims 1 to 45.

50. A chip, comprising: programmable logical circuity and/or one or more program instructions, wherein a device for sensing measurement equipped with the chip, when running, is caused to perform the method for sensing measurement as defined in any one of claims 1 to 45.

51. A computer program product or a computer program, comprising: one or more computer instructions, wherein the one or more computer instructions are stored in a computer-readable storage medium, and when read and executed by a device for sensing measurement, cause the device for sensing measurement to perform the method for sensing measurement as defined in any one of claims 1 to 45.
